# EUROPEAN PATENT APPLICATION

(11) **EP 4 247 051 A1**
(43) Date of publication of application: **20.09.2023**
(21) Application number: 21909230.1
(22) Date of filing: 15.12.2021
(51) Int. Cl.: H04W 28/20

(54) **BANDWIDTH INDICATION METHOD, DEVICE, CHIP, AND COMMUNICATION SYSTEM**

(30) Priority: 26.12.2020 CN 202011570774
(71) Applicant: Huawei Technologies Co., Ltd., Shenzhen, Guangdong 518129 (CN)
(72) Inventor: LI, Yunbo, Shenzhen, Guangdong 518129 (CN); LIU, Chenchen, Shenzhen, Guangdong 518129 (CN); YU, Jian, Shenzhen, Guangdong 518129 (CN); GAN, Ming, Shenzhen, Guangdong 518129 (CN)
(74) Representative: MERH-IP Matias Erny Reichl Hoffmann Patentanwälte PartG mbB
(86) International application number: PCT/CN2021/138364
(87) International publication number: WO 2022/135234

(57) **Abstract**

Embodiments of this application provide a bandwidth indication method and a device. The method includes: A first device generates a first frame, and sends the first frame to a second device. The first frame is a non-high throughput non-HT frame or a non-high throughput duplicated non-HT duplicated frame. The first frame includes a first bit, a second bit, and a third bit. The first bit and the second bit are bits in a scrambling sequence of the first frame. If a first channel bandwidth of the first frame is indicated, the third bit is a first value, and the first bit and the second bit indicate that the first channel bandwidth is one of 20 MHz, 40 MHz, 80 MHz, or 160 MHz. If a second channel bandwidth of the first frame is indicated, the third bit is a second value and indicates the second channel bandwidth, at least one of the first bit and the second bit does not indicate the second channel bandwidth, and the second channel bandwidth is a bandwidth greater than 160 MHz. The method may be applied to the Wi-Fi field, and the second channel bandwidth may be 320 MHz.

## Description

### TECHNICAL FIELD

This application relates to the communication field, and in particular, to a bandwidth indication method, a device, a chip, and a communication system.

### BACKGROUND

In a wireless communication scenario, a transmit end and a receive end are located in different radio channel environments. Therefore, it is very conducive for data communication if a bandwidth available to both the transmit end and the receive end can be negotiated based on a channel availability status of the transmit end and the receive end before data communication. To achieve this objective, in the 802.11ac standard, two bits (namely, a B5 bit and a B6 bit) in the first seven bits of a scrambling sequence (scrambling sequence) used by a non-high throughput (non-high throughput, non-HT) frame or a non-HT duplicated (duplicated) frame indicate bandwidths. Four values of the two bits one-to-one correspond to four bandwidths. The four bandwidths are 20 MHz, 40 MHz, 80 MHz, and 160 MHz (or 80+80 MHz).

Currently, the Institute of Electrical and Electronics Engineers (Institute of Electrical and Electronics Engineers, IEEE) is discussing a next-generation standard (802.11be) after 802.11ax. Compared with the previous 802.11ax standard, the 802.11be standard supports extremely high throughput (extremely high throughput, EHT) data transmission. The 802.11be standard supports a maximum transmission bandwidth of 320 MHz. Therefore, the 802.11be standard introduces bandwidths other than 20 MHz, 40 MHz, 80 MHz, and 80+80 MHz or 160 MHz, such as 320 MHz.

After the bandwidths other than 20 MHz, 40 MHz, 80 MHz, and 80+80 MHz or 160 MHz are introduced, how two devices negotiate a bandwidth is a technical problem to be urgently resolved.

### SUMMARY

The following describes this application from different aspects. It should be understood that mutual reference may be made to the following implementations and beneficial effects of the different aspects.

According to a first aspect, this application provides a bandwidth indication method, and the method includes:
a first device generates a first frame, where the first frame includes a non-high throughput non-HT frame or a non-high throughput duplicated non-HT duplicated frame, the first frame includes a first bit, a second bit, and a third bit, and the first bit and the second bit are bits in a scrambling sequence of the first frame; and
if a first channel bandwidth of the first frame is indicated, the third bit is a first value, and the first bit and the second bit indicate that the first channel bandwidth is one of 20 MHz, 40 MHz, 80 MHz, or 160 MHz; or
if a second channel bandwidth of the first frame is indicated, the third bit is a second value and indicates the second channel bandwidth, at least one of the first bit and the second bit does not indicate the second channel bandwidth, and the second channel bandwidth is a bandwidth greater than 160 MHz; and
the first device sends the first frame to a second device.

According to a second aspect, this application further provides a bandwidth indication method, and the method includes:
a second device receives a first frame sent by a first device, where the first frame is a non-high throughput non-HT frame or a non-high throughput duplicated non-HT duplicated frame, the first frame includes a first bit, a second bit, and a third bit, and the first bit and the second bit are bits in a scrambling sequence of the first frame; and
if the third bit is a first value, the second device determines, based on the first bit and the second bit, that a bandwidth of the first frame is a first channel bandwidth, and the first channel bandwidth is one of 20 MHz, 40 MHz, 80 MHz, or 160 MHz; or
if the third bit is a second value, the second device determines, based on the third bit, that a bandwidth of the first frame is a second channel bandwidth, at least one of the first bit and the second bit does not indicate the second channel bandwidth, and the second channel bandwidth is a bandwidth greater than 160 MHz.

According to a third aspect, this application provides a first device, and the device includes:
a processing unit, configured to generate a first frame, where the first frame is a non-high throughput non-HT frame or a non-high throughput duplicated non-HT duplicated frame, the first frame includes a first bit, a second bit, and a third bit, and the first bit and the second bit are bits in a scrambling sequence of the first frame; and
if a first channel bandwidth of the first frame is indicated, the third bit is a first value, and the first bit and the second bit indicate that the first channel bandwidth is one of 20 MHz, 40 MHz, 80 MHz, or 160 MHz; or
if a second channel bandwidth of the first frame is indicated, the third bit is a second value and indicates the second channel bandwidth, at least one of the first bit and the second bit does not indicate the second channel bandwidth, and the second channel bandwidth is a bandwidth greater than 160 MHz; and
a sending unit, configured to send the first frame to a second device.

According to a fourth aspect, this application provides a second device, and the device includes:
a receiving unit, configured to receive a first frame sent by a first device, where the first frame is a non-high throughput non-HT frame or a non-high throughput duplicated non-HT duplicated frame, the first frame includes a first bit, a second bit, and a third bit, and the first bit and the second bit are bits in a scrambling sequence of the first frame; and
a processing unit, configured to determine a channel bandwidth of the first frame based on the first frame, where
if the third bit is a first value, the second device determines, based on the first bit and the second bit, that a bandwidth of the first frame is a first channel bandwidth, and the first channel bandwidth is one of 20 MHz, 40 MHz, 80 MHz, or 160 MHz; or
if the third bit is a second value, the second device determines, based on the third bit, that a channel bandwidth of the first frame is a second channel bandwidth, at least one of the first bit and the second bit does not indicate the second channel bandwidth, and the second channel bandwidth is a bandwidth greater than 160 MHz.

According to the bandwidth indication method and the device provided above, at least one of the first bit and the second bit does not indicate the second channel bandwidth. In other words, one or two of the first bit and the second bit are not used to carry bandwidth information, or are used to carry non-bandwidth information. This can save indication bits indicating the channel bandwidth, improve randomness of the scrambling sequence, reduce a peak-to-average power ratio in data transmission, and improve communication system performance. In addition, saved indication bits may be used to indicate a new bandwidth, or may be used for another purpose.

With reference to all the foregoing aspects, for example, the second channel bandwidth includes 320 MHz. 160 MHz in the first channel bandwidth includes continuous 160 MHz, or non-continuous 80+80 MHz.

For example, the first bit and the second bit are a B5 bit and a B6 bit in the first seven bits of the scrambling sequence of the first frame. Using B5B6 for bandwidth indication is applicable to a bandwidth indication supporting device of previous generations of standard versions, has high compatibility, and is convenient to operate in practice.

For example, the third bit may be:
any one of a B0 bit, a B 1 bit, a B2 bit, and a B3 bit in the first seven bits of the scrambling sequence of the first frame, one bit in reserved service bits (Reserved SERVICE Bits), one bit in a receiver address (receive address, RA) field, or one bit in a frame control (Frame Control) field. When the third bit is any one of B0 to B3 in the first seven bits of the scrambling sequence, no additional signaling indication is required outside the scrambling sequence, so that signaling overheads can be reduced. When the third bit is a bit of another field, bit overheads of the scrambling sequence are not increased. This can improve randomness of the scrambling sequence, reduce a peak-to-average power ratio in data transmission, and improve communication system performance.

In an implementation, that at least one of the first bit and the second bit does not indicate the second channel bandwidth includes: Values of the first bit and the second bit are random values. Only one bit (the third bit) indicates the channel bandwidth greater than 160 MHz, and the first bit and the second bit are set to random values instead of indicating the second channel bandwidth. This can save bits in the scrambling sequence, improve randomness of the scrambling sequence, reduce a peak-to-average power ratio in data transmission, and improve communication system performance.

In another implementation, that at least one of the first bit and the second bit does not indicate the second channel bandwidth includes: The first bit indicates the second channel bandwidth or a reserved bandwidth, and the second bit is a random value (rather than indicates the second channel bandwidth). For example, the first bit is a third value and indicates the second channel bandwidth, the first bit is a fourth value and indicates the reserved bandwidth, and the second bit is the random value. Alternatively, the second bit indicates the second channel bandwidth or the reserved bandwidth, and the first bit is the random value. For example, the second bit is a third value and indicates the second channel bandwidth, the second bit is a fourth value and indicates the reserved bandwidth, and the first bit is the random value. In this implementation, the third bit and the first bit (or the second bit) indicate the second channel bandwidth, and the second bit (or the first bit) is set to the random value. This can save scrambling bits indicating the channel bandwidth, improve randomness of the scrambling sequence, reduce a peak-to-average power ratio in data transmission, and improve communication system performance. Saved indication bits (bits not for indicating the second channel bandwidth) may be further reserved for another purpose. In addition, another value of the third bit may be used to indicate the reserved bandwidth or a new bandwidth, or may be used for another purpose.

In an implementation, the first frame includes a first field. If at least one bit in bits of the first field is not 0, it indicates that the first field indicates a preamble puncture mode. In this indication manner, an existing state in which a reservation state of the first field is all 0s is handily used to distinguish whether the first field carries the preamble puncture mode. In this indication manner, other explicit indication signaling is not required, thereby reducing signaling overheads. Alternatively, the first device generates a second frame, where the second frame includes a first indication, and the first indication indicates whether the first field indicates the preamble puncture mode. The second frame includes an association request frame or an association response frame. In this indication manner, whether the first field in the first frame is used for the preamble puncture mode is determined based on capability indication information set in an association process of the indication manner. The capability indication information in the association process needs to be sent only once, and does not change subsequently. Therefore, the first frame sent subsequently does not need to carry explicit indication signaling, thereby reducing signaling overheads.

In an implementation, if the third bit is set to the first value, it indicates that a bandwidth granularity of the preamble puncture mode indicated by the first field is 20 MHz. Alternatively, if the third bit is set to the second value, it indicates that a bandwidth granularity of the preamble puncture mode indicated by the first field is 40 MHz. In the indication manner in this implementation, the bandwidth granularity of the preamble puncture mode of the first field is indicated by using a value of the channel bandwidth. The bandwidth granularity may be indicated based on the value of the channel bandwidth, thereby reducing consumption of indication signaling and simplifying a design.

In an implementation, the first field is carried in reserved service bits of the first frame, reserved service bits and the first seven bits of the scrambling sequence of the first frame, or a frame control field. In the indication manner in this implementation, the first field is carried in an existing field, so that an existing frame structure design is not changed. In this way, content of the first frame can be correctly parsed by a third-party station other than a target station, and backward compatibility is maintained.

According to a fifth aspect, this application provides a bandwidth indication method, and the method includes:
a first device generates a first frame, where the first frame is a non-high throughput non-HT frame or a non-high throughput duplicated non-HT duplicated frame, the first frame includes a first bit, a second bit, and a third bit, the first bit and the second bit are bits in a scrambling sequence of the first frame, and the first device is a station that supports a bandwidth greater than 160 MHz; and
the first device sends the first frame to a second device.

If the second device is a station that supports only a bandwidth less than or equal to 160 MHz, the first bit and the second bit indicate a first channel bandwidth, the first channel bandwidth is one of 20 MHz, 40 MHz, 80 MHz, or 160 MHz, and the third bit does not indicate a second channel bandwidth; or
if the second device is a station that supports a bandwidth greater than 160 MHz, when the first channel bandwidth of the first frame is indicated, the third bit is a first value, and the first bit and the second bit indicate that the first channel bandwidth is one of 20 MHz, 40 MHz, 80 MHz, and 80+80 MHz or 160 MHz; or when the second channel bandwidth of the first frame is indicated, the third bit is a second value and indicates the second channel bandwidth, at least one of the first bit and the second bit does not indicate the second channel bandwidth, and the second channel bandwidth is a bandwidth greater than 160 MHz.

According to a sixth aspect, this application further provides a bandwidth indication method, and the method includes:
a second device receives a first frame sent by a first device, where the first frame is a non-high throughput non-HT frame or a non-high throughput duplicated non-HT duplicated frame, the first frame includes a first bit, a second bit, and a third bit, the first bit and the second bit are bits in a scrambling sequence of the first frame, and the first device is a station that supports a bandwidth greater than 160 MHz.

If the second device is a station that supports only a bandwidth less than or equal to 160 MHz, the second device determines, based on the first bit and the second bit, that a bandwidth of the first frame is a first channel bandwidth, the first channel bandwidth is one of 20 MHz, 40 MHz, 80 MHz, or 160 MHz, and the third bit does not indicate the first channel bandwidth; or
if the second device is a station that supports a bandwidth greater than 160 MHz, when the third bit is a first value, the second device determines, based on the first bit and the second bit, that a bandwidth of the first frame is a first channel bandwidth, and the first channel bandwidth is one of 20 MHz, 40 MHz, 80 MHz, and 80+80 MHz or 160 MHz; or when the third bit is a second value, the second device determines, based on the third bit, that a bandwidth of the first frame is a second channel bandwidth, at least one of the first bit and the second bit does not indicate the second channel bandwidth, and the second channel bandwidth is a bandwidth greater than 160 MHz.

According to a seventh aspect, this application provides a first device, and the device includes:
a processing unit, configured to generate a first frame, where the first frame is a non-high throughput non-HT frame or a non-high throughput duplicated non-HT duplicated frame, the first frame includes a first bit, a second bit, and a third bit, the first bit and the second bit are bits in a scrambling sequence of the first frame, and the first device is a station that supports a bandwidth greater than 160 MHz; and
a sending unit, configured to send the first frame to a second device.

If the second device is a station that supports only a bandwidth less than or equal to 160 MHz, the first bit and the second bit indicate a first channel bandwidth, the first channel bandwidth is one of 20 MHz, 40 MHz, 80 MHz, or 160 MHz, and the third bit does not indicate the first channel bandwidth; or
if the second device is a station that supports a bandwidth greater than 160 MHz, when the first channel bandwidth of the first frame is indicated, the third bit is a first value, and the first bit and the second bit indicate that the first channel bandwidth is one of 20 MHz, 40 MHz, 80 MHz, and 80+80 MHz or 160 MHz; or when the second channel bandwidth of the first frame is indicated, the third bit is a second value and indicates the second channel bandwidth, at least one of the first bit and the second bit does not indicate the second channel bandwidth, and the second channel bandwidth is a bandwidth greater than 160 MHz.

According to an eighth aspect, this application provides a second device, and the device includes:
a receiving unit, configured to receive a first frame sent by a first device, where the first frame is a non-high throughput non-HT frame or a non-high throughput duplicated non-HT duplicated frame, the first frame includes a first bit, a second bit, and a third bit, the first bit and the second bit are bits in a scrambling sequence of the first frame, and the first device is a station that supports a bandwidth greater than 160 MHz; and
a processing unit, configured to determine a channel bandwidth based on the first frame.

If the second device is a station that supports only a bandwidth less than or equal to 160 MHz, the second device determines, based on the first bit and the second bit, that a bandwidth of the first frame is a first channel bandwidth, the first channel bandwidth is one of 20 MHz, 40 MHz, 80 MHz, or 160 MHz, and the third bit does not indicate the first channel bandwidth; or
if the second device is a station that supports a bandwidth greater than 160 MHz, when the third bit is a first value, the second device determines, based on the first bit and the second bit, that a bandwidth of the first frame is a first channel bandwidth, and the first channel bandwidth is one of 20 MHz, 40 MHz, 80 MHz, and 80+80 MHz or 160 MHz; or when the third bit is a second value, the second device determines, based on the third bit, that a bandwidth of the first frame is a second channel bandwidth, at least one of the first bit and the second bit does not indicate the second channel bandwidth, and the second channel bandwidth is a bandwidth greater than 160 MHz.

According to the bandwidth indication method and the device provided above, at least one of the first bit and the second bit does not indicate the second channel bandwidth. In other words, one or two of the first bit and the second bit are not used to carry bandwidth information, or are used to carry non-bandwidth information. This can save indication bits indicating the channel bandwidth, improve randomness of the scrambling sequence, reduce a peak-to-average power ratio in data transmission, and improve communication system performance. In addition, saved indication bits may be used to indicate a new bandwidth, or may be used for another purpose.

With reference to the fifth aspect to the eighth aspect, for example, the second channel bandwidth includes 320 MHz. 160 MHz in the first channel bandwidth includes continuous 160 MHz, or non-continuous 80+80 MHz.

For example, the station that supports a bandwidth greater than 160 MHz includes an extremely high throughput EHT station that supports the 802. 1 The standard.

For example, the first bit and the second bit are a B5 bit and a B6 bit in the first seven bits of the scrambling sequence of the first frame. Using B5B6 for bandwidth indication is applicable to a bandwidth indication supporting device of previous generations of standard versions, has high compatibility, and is convenient to operate in practice.

For example, the third bit may be:
any one of a B0 bit, a B 1 bit, a B2 bit, and a B3 bit in the first seven bits of the scrambling sequence of the first frame, one bit in reserved service bits (Reserved SERVICE Bits), one bit in a receiver address (RA) field, or one bit in a frame control (Frame Control) field. When the third bit is any one of B0 to B3 in the first seven bits of the scrambling sequence, no additional signaling indication is required outside the scrambling sequence, so that signaling overheads can be reduced. When the third bit is a bit of another field, bit overheads of the scrambling sequence are not increased. This can improve randomness of the scrambling sequence, reduce a peak-to-average power ratio in data transmission, and improve communication system performance.

In an implementation, that at least one of the first bit and the second bit does not indicate the second channel bandwidth includes: Values of the first bit and the second bit are random values. Only one bit (the third bit) indicates the channel bandwidth greater than 160 MHz, and the first bit and the second bit are set to random values instead of indicating the second channel bandwidth. This can save bits in the scrambling sequence, improve randomness of the scrambling sequence, reduce a peak-to-average power ratio in data transmission, and improve communication system performance.

In another implementation, that at least one of the first bit and the second bit does not indicate the second channel bandwidth includes: The first bit indicates the second channel bandwidth or a reserved bandwidth, and the second bit is a random value (rather than indicates the second channel bandwidth). For example, the first bit is a third value and indicates the second channel bandwidth, the first bit is a fourth value and indicates the reserved bandwidth, and the second bit is the random value. Alternatively, the second bit indicates the second channel bandwidth or the reserved bandwidth, and the first bit is the random value. For example, the second bit is a third value and indicates the second channel bandwidth, the second bit is a fourth value and indicates the reserved bandwidth, and the first bit is the random value. In this implementation, the third bit and the first bit (or the second bit) indicate the second channel bandwidth, and the second bit (or the first bit) is set to the random value. This can save scrambling bits indicating the channel bandwidth, improve randomness of the scrambling sequence, reduce a peak-to-average power ratio in data transmission, and improve communication system performance. Saved indication bits (bits not for indicating the second channel bandwidth) may be further reserved for another purpose. In addition, another value of the third bit may be used to indicate the reserved bandwidth or a new bandwidth, or may be used for another purpose.

In an implementation, the first frame includes a first field. If at least one bit in bits of the first field is not 0, it indicates that the first field indicates a preamble puncture mode. In this indication manner, an existing state in which a reservation state of the first field is all 0s is handily used to distinguish whether the first field carries the preamble puncture mode. In this indication manner, other explicit indication signaling is not required, thereby reducing signaling overheads. Alternatively, the first device generates a second frame, where the second frame includes a first indication, and the first indication indicates whether the first field indicates the preamble puncture mode. The second frame includes an association request frame or an association response frame. In this indication manner, whether the first field in the first frame is used for the preamble puncture mode is determined based on capability indication information set in an association process of the second frame. The capability indication information in the association process needs to be sent only once, and does not change subsequently. Therefore, the first frame sent subsequently does not need to carry explicit indication signaling, thereby reducing signaling overheads.

In an implementation, if the third bit is set to the first value, it indicates that a bandwidth granularity of the preamble puncture mode indicated by the first field is 20 MHz. Alternatively, if the third bit is set to the second value, it indicates that a bandwidth granularity of the preamble puncture mode indicated by the first field is 40 MHz. In the indication manner in this implementation, the bandwidth granularity of the preamble puncture mode of the first field is indicated by using a value of the channel bandwidth. The bandwidth granularity may be indicated based on the value of the channel bandwidth, thereby reducing consumption of indication signaling and simplifying a design.

In an implementation, the first field is carried in reserved service bits of the first frame, reserved service bits and the first seven bits of the scrambling sequence of the first frame, or a frame control field. In the indication manner in this implementation, the first field is carried in an existing field, so that an existing frame structure design is not changed. In this way, content of the first frame can be correctly parsed by a third-party station other than a target station, and backward compatibility is maintained.

According to a ninth aspect, this application provides an information indication method, and the method includes:
a first device generates a first frame, where the first frame is a non-high throughput non-HT frame or a non-high throughput duplicated non-HT duplicated frame, the first frame includes a first field, and if at least one bit in bits of the first field is not 0, it indicates that the first field indicates a preamble puncture mode; and
the first device sends the first frame to a second device.

According to a tenth aspect, this application further provides an information indication method, and the method includes:
a first device generates a first frame, where the first frame is a non-high throughput non-HT frame or a non-high throughput duplicated non-HT duplicated frame, and the first frame includes a first field;
the first device generates a second frame, where the second frame includes a first indication, the second frame includes an association request frame or an association response frame, and the first indication indicates whether the first field indicates the preamble puncture mode; and
the first device sends the first frame and the second frame to a second device.

According to an eleventh aspect, this application further provides an information indication method, and the method includes:
a second device receives a first frame sent by a first device, where the first frame is a non-high throughput non-HT frame or a non-high throughput duplicated non-HT duplicated frame, and the first frame includes a first field; and
if at least one bit in bits of the first field is not 0, the second device determines that the first field indicates a preamble puncture mode.

According to a twelfth aspect, this application further provides an information indication method, and the method includes:
a second device receives a first frame and a second frame that are sent by a first device, where the first frame is a non-high throughput non-HT frame or a non-high throughput duplicated non-HT duplicated frame, the first frame includes a first field, the second frame includes a first indication, and the second frame includes an association request frame or an association response frame; and
the second device determines, based on the first indication, whether the first field indicates a preamble puncture mode.

According to a thirteenth aspect, this application provides a first device, and the device includes:
a processing unit, configured to generate a first frame, where the first frame is a non-high throughput non-HT frame or a non-high throughput duplicated non-HT duplicated frame, the first frame includes a first field, and if at least one bit in bits of the first field is not 0, it indicates that the first field indicates a preamble puncture mode; and
a sending unit, configured to send the first frame to a second device.

According to a fourteenth aspect, this application further provides a first device, and the device includes:
a processing unit, configured to generate a first frame, where the first frame is a non-high throughput non-HT frame or a non-high throughput duplicated non-HT duplicated frame, and the first frame includes a first field; and
configured to generate a second frame, where the second frame includes a first indication, the second frame includes an association request frame or an association response frame, and the first indication indicates whether the first field indicates a preamble puncture mode; and
a sending unit, configured to send the first frame and the second frame to a second device.

According to a fifteenth aspect, this application provides a second device, and the device includes:
a receiving unit, configured to receive a first frame sent by a first device, where the first frame is a non-high throughput non-HT frame or a non-high throughput duplicated non-HT duplicated frame, and the first frame includes a first field; and
a processing unit, configured to: if at least one bit in bits of the first field is not 0, determine that the first field indicates a preamble puncture mode.

According to a sixteenth aspect, this application further provides a second device, and the device includes:
a receiving unit, configured to receive a first frame and a second frame that are sent by a first device, where the first frame is a non-high throughput non-HT frame or a non-high throughput duplicated non-HT duplicated frame, the first frame includes a first field, the second frame includes a first indication, and the second frame includes an association request frame or an association response frame; and
a processing unit, configured to determine, based on the first indication, whether the first field indicates a preamble puncture mode.

With reference to the ninth aspect to the sixteenth aspect, for example, the first field is indicated in a non-OFDMA mode. A determined mode can be indicated by using a non-OFDMA bandwidth mode, and required indication overheads are small.

In an implementation, the first field is carried in reserved service bits of the first frame, reserved service bits and the first seven bits of the scrambling sequence of the first frame, or a frame control field. In the indication manner in this implementation, the first field is carried in an existing field, so that an existing frame structure design is not changed. In this way, content of the first frame can be correctly parsed by a third-party station other than a target station, and backward compatibility is maintained.

According to a seventeenth aspect, this application provides a bandwidth granularity indication method, and the method includes:
a first device generates a first frame, where the first frame is a non-high throughput non-HT frame or a non-high throughput duplicated non-HT duplicated frame, the first frame includes a first bit, a second bit, and a fourth bit, and the first bit and the second bit are bits in a scrambling sequence of the first frame; and
if a first bandwidth granularity of the first frame is indicated, the fourth bit is a first value, the first bandwidth granularity is 20 MHz and corresponds to a first channel bandwidth, the first bit and the second bit indicate the first channel bandwidth, and the first channel bandwidth is one of 20 MHz, 40 MHz, 80 MHz, or 160 MHz; or
if a second bandwidth granularity of the first frame is indicated, the fourth bit is a second value, the second bandwidth granularity is 40 MHz and corresponds to a second channel bandwidth, and the second channel bandwidth is a bandwidth greater than 160 MHz; and
the first device sends the first frame to a second device.

According to an eighteenth aspect, this application further provides a bandwidth granularity indication method, and the method includes:
a second device receives a first frame sent by a first device, where the first frame is a non-high throughput non-HT frame or a non-high throughput duplicated non-HT duplicated frame, the first frame includes a first bit, a second bit, and a fourth bit, and the first bit and the second bit are bits in a scrambling sequence of the first frame.

If the fourth bit is a first value, the second device determines that a bandwidth granularity of the first frame is a first bandwidth granularity, the first bandwidth granularity is 20 MHz and corresponds to a first channel bandwidth less than or equal to 160 MHz, the first device determines, based on the first bit and the second bit, that a bandwidth of the first frame is the first channel bandwidth, and the first channel bandwidth is one of 20 MHz, 40 MHz, 80 MHz, or 160 MHz; or
if the fourth bit is a second value, the second device determines that a bandwidth granularity of the first frame is a second bandwidth granularity, the second bandwidth granularity is 40 MHz and corresponds to a second channel bandwidth, and the second channel bandwidth is a bandwidth greater than 160 MHz.

According to a nineteenth aspect, this application provides a first device, and the device includes:
a processing unit, configured to generate a first frame, where the first frame is a non-high throughput non-HT frame or a non-high throughput duplicated non-HT duplicated frame, the first frame includes a first bit, a second bit, and a fourth bit, and the first bit and the second bit are bits in a scrambling sequence of the first frame; and
if a first bandwidth granularity of the first frame is indicated, the fourth bit is a first value, the first bandwidth granularity is 20 MHz and corresponds to a first channel bandwidth less than or equal to 160 MHz, the first bit and the second bit indicate the first channel bandwidth, and the first channel bandwidth is one of 20 MHz, 40 MHz, 80 MHz, or 160 MHz; or
if a second bandwidth granularity of the first frame is indicated, the fourth bit is a second value, the second bandwidth granularity is 40 MHz and corresponds to a second channel bandwidth, and the second channel bandwidth is a bandwidth greater than 160 MHz; and
a sending unit, configured to send the first frame to a second device.

According to a twentieth aspect, this application provides a second device, and the device includes:
a receiving unit, configured to receive a first frame sent by a first device, where the first frame is a non-high throughput non-HT frame or a non-high throughput duplicated non-HT duplicated frame, the first frame includes a first bit, a second bit, and a fourth bit, and the first bit and the second bit are bits in a scrambling sequence of the first frame; and
a processing unit, configured to determine a bandwidth granularity of a channel based on the first frame.

If the fourth bit is a first value, the second device determines that a bandwidth granularity of the first frame is a first bandwidth granularity, the first bandwidth granularity is 20 MHz and corresponds to a first channel bandwidth, the first device determines, based on the first bit and the second bit, that a bandwidth of the first frame is the first channel bandwidth, and the first channel bandwidth is one of 20 MHz, 40 MHz, 80 MHz, or 160 MHz; or
if the fourth bit is a second value, the second device determines that a bandwidth granularity of the first frame is a second bandwidth granularity, the second bandwidth granularity is 40 MHz and corresponds to a second channel bandwidth, and the second channel bandwidth is a bandwidth greater than 160 MHz.

With reference to the seventeenth aspect to the twentieth aspect, in a possible implementation, the first bandwidth granularity and the second bandwidth granularity indicate a bandwidth granularity of a preamble puncture mode. In the indication manner in this implementation, the channel bandwidth is indicated by indicating the bandwidth granularity of the preamble puncture mode of the frame and distinguishing the bandwidth granularity, thereby reducing consumption of indication signaling and simplifying a design.

In a possible implementation, the second channel bandwidth includes 320 MHz. 160 MHz in the first channel bandwidth includes continuous 160 MHz, or non-continuous 80+80 MHz.

In a possible implementation, the first bit and the second bit are a B5 bit and a B6 bit in the first seven bits of the scrambling sequence of the first frame. Using B5B6 for bandwidth indication is applicable to a bandwidth indication supporting device of previous generations of standard versions, has high compatibility, and is convenient to operate in practice.

In a possible implementation, the fourth bit may be any one of a B0 bit, a B 1 bit, a B2 bit, and a B3 bit in the first seven bits of the scrambling sequence of the first frame, one bit in reserved service bits (Reserved SERVICE Bits), one bit in a receiver address (RA) field, or one bit in a frame control (Frame Control) field. When the fourth bit is any one of B0 to B3 in the first seven bits of the scrambling sequence, no additional signaling indication is required outside the scrambling sequence, so that signaling overheads can be reduced. When the third bit is a bit of another field, bit overheads of the scrambling sequence are not increased. This can improve randomness of the scrambling sequence, reduce a peak-to-average power ratio in data transmission, and improve communication system performance.

That at least one of the first bit and the second bit does not indicate the second channel bandwidth includes: Values of the first bit and the second bit are random values. Only one bit (the third bit) indicates the channel bandwidth greater than 160 MHz, and the first bit and the second bit are set to random values instead of indicating the second channel bandwidth. This can save bits in the scrambling sequence, improve randomness of the scrambling sequence, reduce a peak-to-average power ratio in data transmission, and improve communication system performance.

In another implementation, that at least one of the first bit and the second bit does not indicate the second channel bandwidth includes: The first bit indicates the second channel bandwidth or a reserved bandwidth, and the second bit is a random value (rather than indicates the second channel bandwidth). For example, the first bit is a third value and indicates the second channel bandwidth, the first bit is a fourth value and indicates the reserved bandwidth, and the second bit is the random value. Alternatively, the second bit indicates the second channel bandwidth or the reserved bandwidth, and the first bit is the random value. For example, the second bit is a third value and indicates the second channel bandwidth, the second bit is a fourth value and indicates the reserved bandwidth, and the first bit is the random value. In this implementation, the third bit and the first bit (or the second bit) indicate the second channel bandwidth, and the second bit (or the first bit) is set to the random value. This can save scrambling bits indicating the channel bandwidth, improve randomness of the scrambling sequence, reduce a peak-to-average power ratio in data transmission, and improve communication system performance. Saved indication bits (bits not for indicating the second channel bandwidth) may be further reserved for another purpose. In addition, another value of the third bit may be used to indicate the reserved bandwidth or a new bandwidth, or may be used for another purpose.

In an implementation, the first frame includes a first field. If at least one bit in bits of the first field is not 0, it indicates that the first field indicates a preamble puncture mode. Alternatively, the first device generates a second frame, where the second frame includes a first indication, and the first indication indicates whether the first field indicates the preamble puncture mode. The second frame includes an association request frame or an association response frame.

In an implementation, the first field is carried in reserved service bits of the first frame, reserved service bits and the first seven bits of the scrambling sequence of the first frame, or a frame control field. In the indication manner in this implementation, the first field is carried in an existing field, so that an existing frame structure design is not changed. In this way, content of the first frame can be correctly parsed by a third-party station other than a target station, and backward compatibility is maintained.

According to a twenty-first aspect, this application provides a communication apparatus, configured to perform the method according to any one of the possible implementations of the first aspect, the second aspect, the fifth aspect, the sixth aspect, the ninth aspect to the twelfth aspect, the seventeenth aspect, or the eighteenth aspect. Specifically, the apparatus includes units configured to perform the method according to any one of the first aspect or the possible implementations of the first aspect.

According to a twenty-second aspect, this application provides a computer-readable storage medium, configured to store a computer program. When computer instructions are run on a computer, instructions of the method according to any one of the possible implementations of the first aspect, the second aspect, the fifth aspect, the sixth aspect, the ninth aspect to the twelfth aspect, the seventeenth aspect, or the eighteenth aspect are executed.

According to a twenty-third aspect, an embodiment of this application provides a computer program product. The computer program product includes a computer program stored in a computer-readable storage medium. The computing program may be loaded by a processor to implement the method according to any one of the possible implementations of the first aspect, the second aspect, the fifth aspect, the sixth aspect, the ninth aspect to the twelfth aspect, the seventeenth aspect, or the eighteenth aspect.

According to a twenty-fourth aspect, this application provides a chip. The chip includes a logic circuit and an interface circuit. The logic circuit is configured to perform generation steps in the method according to any one of the possible implementations of the first aspect, the second aspect, the fifth aspect, the sixth aspect, the ninth aspect to the twelfth aspect, the seventeenth aspect, or the eighteenth aspect. The interface circuit is configured to perform a sending or receiving action in the method according to any one of the possible implementations of the first aspect, the second aspect, the fifth aspect, the sixth aspect, the ninth aspect to the twelfth aspect, the seventeenth aspect, or the eighteenth aspect. In this case, "sending" is equivalent to "output", and "receiving" is equivalent to "input". For example, when the chip is configured to perform the method in the first aspect, the chip is provided. The chip includes a first logic circuit and a first interface circuit. The first logic circuit is configured to generate a first frame. The first interface circuit is configured to output the first frame. The first frame is a non-high throughput non-HT frame or a non-high throughput duplicated non-HT duplicated frame. The first frame includes a first bit, a second bit, and a third bit. The first bit and the second bit are bits in a scrambling sequence of the first frame. When a first channel bandwidth of the first frame is indicated, the third bit is a first value, and the first bit and the second bit indicate that the first channel bandwidth is one of 20 MHz, 40 MHz, 80 MHz, or 160 MHz. When a second channel bandwidth of the first frame is indicated, the third bit is a second value and indicates the second channel bandwidth, at least one of the first bit and the second bit does not indicate the second channel bandwidth, and the second channel bandwidth is a bandwidth greater than 160 MHz.

For another example, when the chip is configured to perform the method in the second aspect, the chip includes a second logic circuit and a second interface circuit. The second interface circuit is configured to input a first frame. The second logic circuit is configured to determine a channel bandwidth of the first frame based on the first frame. The first frame is a non-high throughput non-HT frame or a non-high throughput duplicated non-HT duplicated frame. The first frame includes a first bit, a second bit, and a third bit. The first bit and the second bit are bits in a scrambling sequence of the first frame. If the third bit is a first value, the second device determines, based on the first bit and the second bit, that the channel bandwidth of the first frame is a first channel bandwidth, and the first channel bandwidth is one of 20 MHz, 40 MHz, 80 MHz, or 160 MHz; or if the third bit is a second value, the second device determines, based on the third bit, that the channel bandwidth of the first frame is a second channel bandwidth, at least one of the first bit and the second bit does not indicate the second channel bandwidth, and the second channel bandwidth is a bandwidth greater than 160 MHz.

According to a twenty-fifth aspect, this application provides a communication system. The communication system includes a first device and a second device. The first device is configured to perform the method according to any one of the possible implementations of the first aspect, the fifth aspect, the ninth aspect, the tenth aspect, or the seventeenth aspect. The second device is configured to perform the method according to any one of the possible implementations of the second aspect, the sixth aspect, the eleventh aspect, the twelfth aspect, or the eighteenth aspect.

For technical effects brought by any design of the twentieth aspect to the twenty-fifth aspect, refer to technical effects brought by corresponding designs of the first aspect to the twentieth aspect. Details are not described herein again.

### BRIEF DESCRIPTION OF DRAWINGS

To describe technical solutions in embodiments of the present invention or in the background more clearly, the following describes accompanying drawings to be used in embodiments of the present invention or in the background.
FIG. 1 is a schematic diagram of a structure of a communication system according to an embodiment of this application;
FIG. 2 is a schematic diagram of a structure of a service field according to an embodiment of this application;
FIG. 3 is a schematic diagram of a structure of an address field according to an embodiment of this application;
FIG. 4 is a schematic flowchart of an indication method according to an embodiment of this application;
FIG. 5 is a schematic diagram of a structure of a communication system according to an embodiment of this application;
FIG. 6 is a flowchart of data sending according to an embodiment of this application;
FIG. 7 is a schematic diagram of a structure of a CF-END frame according to an embodiment of this application;
FIG. 8 is a schematic diagram of a puncture mode in which a channel bandwidth is punctured according to an embodiment of this application;
FIG. 9 is a schematic flowchart of an information indication method according to an embodiment of this application;
FIG. 10 is a schematic diagram of a structure of a communication apparatus according to an embodiment of this application;
FIG. 11 is a schematic diagram of a structure of another communication apparatus according to an embodiment of this application;
FIG. 12 is a schematic diagram of a structure of another communication apparatus according to an embodiment of this application;
FIG. 13 is a schematic diagram of a structure of another communication apparatus according to an embodiment of this application;
FIG. 14 is a schematic diagram of a structure of a chip according to an embodiment of this application; and
FIG. 15 is a schematic diagram of a structure of another chip according to an embodiment of this application.

### DESCRIPTION OF EMBODIMENTS

The following clearly and completely describes technical solutions in embodiments of this application with reference to the accompanying drawings in embodiments of this application.

A wireless communication system applicable to embodiments of this application may be a wireless local area network (Wireless local area network, WLAN), a cellular network, a high performance radio LAN (high performance radio LAN, HIPERLAN), a wide area network (WAN), a personal area network (personal area network, PAN), or another network that is known currently or developed in the future. The technical solutions provided in this application may be applied to various WLAN communication systems, for example, a system using the IEEE 802.11 standard. For example, the IEEE 802.11 standard includes, but is not limited to, the 802.1The standard or a next-generation 802.11 standard. Application scenarios of the technical solutions of this application include: communication between an access point (access point, AP) and a station (station, STA), communication between APs, and communication between STAs, and the like. In the standard, the station STA is also generally referred to as a non-access point station non-AP STA, and is a non-AP for short.

The STA in this application may be any user terminal, user apparatus, access apparatus, subscriber station, subscriber unit, mobile station, user agent, or user equipment, or another name that has a wireless communication function. The user terminal may include various handheld devices, in-vehicle devices, wearable devices, computing devices, or other processing devices connected to a wireless modem that have a wireless communication function; or various forms of user equipment (user equipment, UE), mobile stations (mobile station, MS), terminals (terminal), terminal equipment (terminal equipment), portable communication devices, handheld devices, portable computing devices, entertainment devices, game devices or systems, global positioning system devices, or any other appropriate devices configured to perform network communication through a wireless medium.

The access point AP in this application is an apparatus that is deployed in a wireless communication network and that provides a wireless communication function for a STA associated with the access point AP. The access point AP may be used as a hub of the communication system, and may be a communication device such as a base station, a router, a gateway, a repeater, a communication server, a switch, or a bridge. The base station may include various forms of macro base stations, micro base stations, relay stations, and the like.

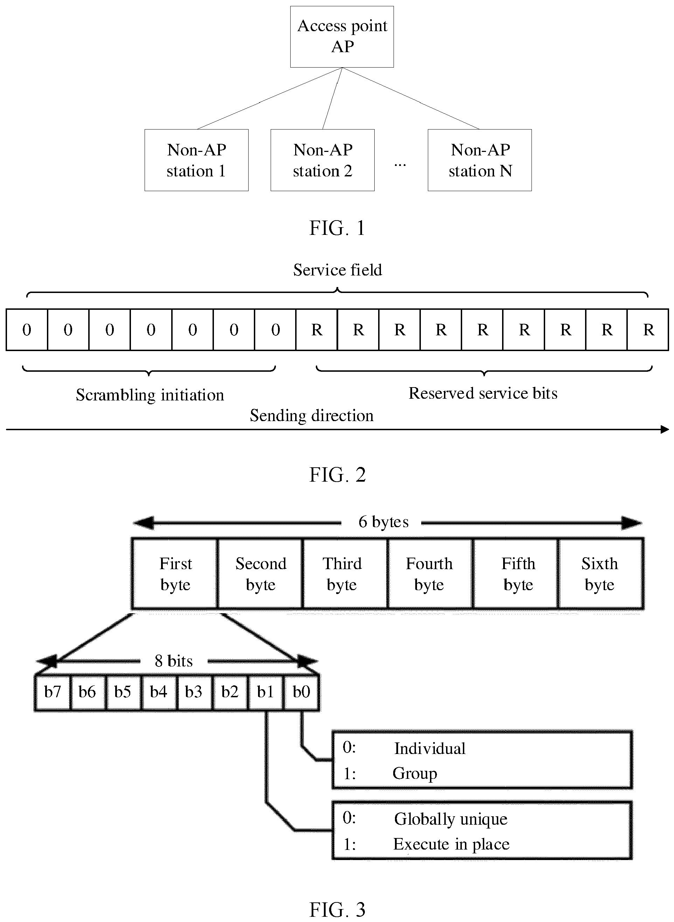

IEEE 802.11 is one of current mainstream wireless access standards and has been widely used in commercial applications in the past decade. Communication between an access point AP and a station STA is used as an example. A common basic architecture is shown in FIG. 1. One access point AP accesses the Internet in a wired or wireless manner, the AP is associated with multiple stations STAs, and the AP and the associated stations perform uplink and downlink communication by using the IEEE 802.11 protocol. In embodiments of this application, for ease of description, the AP and the STA mentioned above are collectively referred to as stations.

The WLAN starts from the 802.11a/g, goes through the 802.11n and the 802.11ac, and goes through the 802.11ax and the 802.11be that are currently discussed. For allowed transmission bandwidths of the WLAN, refer to Table 1. The 802.11n standard is also referred to as a high throughput (high throughput, HT), the 802.11ac standard is referred to as a very high throughput (very high throughput, VHT), the 802.11ax (Wi-Fi 6) is referred to as an HE (High Efficiency), the 802.11be (Wi-Fi 7) is referred to as an extremely high throughput (extremely high throughput, EHT), and standards before the HT, such as the 802.11a/b/g, are collectively referred to as a non-high throughput (Non-HT). The 802.11b uses a non-orthogonal frequency division multiplexing (orthogonal frequency division multiplexing, OFDM) mode, and therefore is not listed in Table 1.

**Table 1**

| | 802.11 a/g | 802.11n (HT) | 802.11ac (VHT) | 802.11 ax (HE) | 802.11be (EHT) |
|---|---|---|---|---|---|
| Bandwidth | 20 MHz | 20/40 MHz | 20/40/80/160 MHz | 20/40/80/160 MHz | 20/40/80/160/240/ 320 MHz |

In the IEEE 802.11a standard, only a 20 MHz bandwidth is supported. Supported bandwidth has continuously increased with evolution to subsequent standards. The 802.11n standard supports a maximum bandwidth of 40 MHz, and the 802.11ac/802.11ax standard supports a maximum bandwidth of 160 MHz. The 160 MHz bandwidth includes continuous 160 MHz, or non-continuous 160 MHz (80+80 MHz). In a standard after 802.11a, to ensure backward compatibility (backward compatibility), a station that supports a next-generation standard also needs to support old standards. Some control frames are sent in a non-HT duplicated manner on a channel whose bandwidth is greater than 20 MHz. In other words, the control frame uses a non-HT format (in other words, the control frame uses a format that complies with the 802.11a standard), and the control frame is duplicated to a 20 MHz channel in the channels for sending. In other words, a frame in an 802.11a format is sent on each 20 MHz channel, and content on multiple 20 MHz channels is repeated. In this way, the 802.11a station can also successfully parse the frame, thereby ensuring backward compatibility. For ease of description, a frame sent in the non-HT duplicated manner is referred to as a non-HT duplicated frame or a frame in a non-HT duplicated format below.

There are many hidden nodes in WLANs. Therefore, RTS/CTS interaction is often used to reserve channels. RTS and CTS frames are sent in a non-HT duplicated manner in a bandwidth greater than 20 MHz. Because radio channel environments of a sending station and a receiving station are different, it is very useful for data communication if a bandwidth available to both parties can be negotiated according to a channel availability status of the sending station and the receiving station before data communication. However, because 802.11a supports only a 20 MHz bandwidth, and does not need to indicate bandwidth indication information, the non-HT frame or the non-HT duplicated frame does not carry the bandwidth indication information. Therefore, a receive end cannot accurately learn of a bandwidth used by a transmit end in this case. Therefore, when RTS and CTS cannot carry bandwidth information, bandwidth negotiation cannot be performed when a channel is reserved.

For example, in the 802.11n standard, the non-HT frame or the non-HT duplicated frame includes a service field. For a structure of the service field, refer to FIG. 2. To be specific, a data part starts with a 16-bit service field (SERVICE field), where the service field may be divided into two parts. The first seven bits of the service field are a scrambling initialization (Scrambler Initialization) field, and are set to all 0s. The last nine bits of the service field are reserved service bits, and may be referred to as reserved service bits (Reserved SERVICE Bits), or may be referred to as a reserved service field. Currently, the last nine bits are also set to 0 (for example, seven bits marked with 0 in FIG. 2). The data part including the service field is scrambled by a scrambler. The scrambler generates a scrambling sequence, where the scrambling sequence is formed by continuously repeating a 127-bit sequence, and the 127-bit sequence is generated by using a scrambler based on a 7-bit scrambling initiation state. In other words, the data part including the service field is scrambled by using the scrambling sequence generated by the scrambler. Because the first seven bits of the service field are all 0s, the first seven bits of the scrambled service field are the same as the first seven bits of the scrambling sequence. In other words, the first seven bits of the service field are used to carry the first seven bits of the scrambling sequence (scrambling sequence). In this application, names of provided indication bits or fields are examples for description, and include bits or fields that can implement a same function. This is not limited herein.

Because the non-HT duplicated frame is in a legacy format (legacy format), if the non-HT duplicated frame is modified, a conventional station cannot appropriately parse the non-HT duplicated frame. In addition, to achieve an objective of bandwidth negotiation, in the 802.11ac standard, a B5 bit and a B6 bit in the first seven bits of the scrambling sequence used by the non-HT frame or the non-HT duplicated frame are set as a CH_BANDWITH_IN_NON_HT field, and the CH_BANDWIDTH_IN_NON_HT field indicates a bandwidth.

The first seven bits of the scrambling sequence are sequentially numbered a B0 bit to the B6 bit from a least significant bit to a most significant bit. Therefore, the B5 bit is the sixth bit in the first seven bits of the scrambling sequence, and the B6 bit is the seventh bit in the first seven bits of the scrambling sequence. As shown in FIG. 2, sending starts from a least significant bit (least significant bit, LSB). In other words, a sending sequence of the first seven bits of the scrambling sequence starts from B0 and ends to B6. Correspondingly, when B6 and B5 indicate bandwidth information, B5 is a least significant bit, and B6 is a most significant bit. In other words, B5 is sent first, and B6 is sent later.

For example, in the 802.11ac standard, the least significant bit in the CH_BANDWITH_IN_NON_HT field is preferentially sent, and a correspondence between a value of the CH_BANDWIDTH_IN_NON_HT field and a bandwidth may be shown in Table 2. In Table 2, a unit of a channel bandwidth (channel bandwidth, CBW) is MHz, CBW20 indicates a bandwidth of 20 MHz, CBW40 indicates a bandwidth of 40 MHz, CBW80 indicates a bandwidth of 80 MHz, CBW160 indicates a bandwidth of 160 MHz, and CBW80+80 indicates a bandwidth of 80+80 MHz (non-continuous 160 MHz). For example, the value of CBW80 is 2, and is 10 in binary. In this case, B5 = 0, and B6 = 1.

**Table 2**

| Enumerated value of a bandwidth | Value |
|---|---|
| CBW20 | 0 |
| CBW40 | 1 |
| CBW80 | 2 |
| CBW160 or CBW80+80 | 3 |

The bandwidth may also be referred to as a channel bandwidth or a bandwidth. The bandwidth indicated by the CH_BANDWIDTH_IN_NON_HT field in the current frame is a channel bandwidth used for frame transmission, or a bandwidth occupied by a frame, and sometimes is also referred to as a bandwidth of a frame.

Refer to a transmitter address field or a receiver address field of the frame in the non-HT format shown in FIG. 3. The transmitter address field or the receiver address field includes six bytes. The first byte includes eight bits: b0, b1, b2, b3, b4, b5, b6, and b7. To allow the receive end to learn whether the transmit end includes the CH_BANDWIDTH_IN_NON_HT field in the scrambling sequence, the transmit end uses bandwidth Signaling TA for indication. The bandwidth Signaling TA indicates that the transmit end uses an individual (Individual)/group (Group) bit in the transmitter address (transmitter address, TA) field in the non-HT frame or the non-HT duplicated frame to indicate whether the B5 bit and the B6 bit in the first seven bits of the scrambling sequence are used as the CH_BANDWITH_IN_NON_HT field, that is, whether B5 and B6 indicate a bandwidth. The individual/group bit is the first bit of the first byte of the transmitter address field or the receiver address field, that is, b0. In another representation form, individual (unicast)/group (multicast) also refers to the first bit of the first byte of the transmitter address field or the receiver address field. Specifically, if the individual/group bit is set to 1, it indicates that the B5 bit and the B6 bit in the first seven bits of the scrambling sequence are used as the CH_BANDWIDTH_IN-NON_HT field, and indicate the bandwidth. If the individual/group bit is set to 0, it indicates that the B5 bit and the B6 bit in the first seven bits of the scrambling sequence are not used as the CH_BANDWIDTH_IN_NON_HT field, and may still be random values or used for another purpose.

With development of technologies, in the wireless communication scenario, bandwidths that may be used between the transmit end and the receive end may exceed the four bandwidths shown in Table 2. For example, because the 802.11be standard supports a maximum transmission bandwidth of 320 MHz, other bandwidths such as 320 MHz may be used between the transmit end and the receive end that use the 802. 1 The standard.

During the evolution of a WLAN system, backward compatibility is always required. A station that supports a next-generation standard also needs to support old standards. For example, a station in a next-generation standard of 802.11ax is referred to as an EHT station, and is also a non-HT (802. 11a) station, an HT (802.11n) station, a VHT (802. 1 1ac) station, and an HE (802.11ax) station while being compatible with previous generations of standards. Currently, the CH_BANDWIDTH_IN_NON_HT field can support only four bandwidths shown in Table 2, and all four states of the CH_BANDWIDTH_IN_NON_HT field (the B5 bit and the B6 bit) are used up. Therefore, in the next-generation standard 802. 1 1be (hereinafter referred to as EHT, Extremely High Throughput) of 802. 1 1ax, the bandwidth may be extended to 320 MHz. In a scenario in which a bandwidth other than 20 MHz, 40 MHz, 80 MHz, 80+80 MHz, or 160 MHz is introduced, how a non-HT frame or a non-HT duplicated frame indicates a bandwidth is a technical problem to be urgently resolved.

When the individual/group bit in the transmitter address TA field in the non-HT frame or the non-HT duplicated frame is set to 1, it indicates that the sending station includes CH_BANDWIDTH_IN_NON_HT information in the scrambling sequence. In other words, the B5 bit and the B6 bit in the first seven bits of the scrambling sequence are used as the CH BANDWIDTH INNONHT field. In a VHT station and an HE station, B5B6 in the first seven bits of the scrambling sequence of the non-HT frame or the non-HT duplicated frame indicates modes of 20 MHz, 40 MHz, 80 MHz, and 160 (80+80) MHz. In a conventional technology, an EHT station uses B5B6 and another bit (for example, B3) in the scrambling sequence to indicate modes of 20 MHz, 40 MHz, 80 MHz, 160 (80+80) MHz, and 320 MHz. As shown in Table 3, three bits B3, B5, and B6 indicate a mode of 320 MHz.

**Table 3**

| B3 | BSB6 | BW |
|---|---|---|
| 0 | 0 | 20 MHz |
| 0 | 1 | 40 MHz |
| 0 | 2 | 80 MHz |
| 0 | 3 | 160 MHz or 80+80 MHz |
| 1 | 0 | 320 MHz |
| 1 | 1-3 | Reserved |

In the indication method described in Table 3, when B3 = 0, B5B6 in the scrambling sequence respectively indicates 20 MHz, 40 MHz, 80 MHz, and 160 (80+80) MHz. When B3 = 1 and BSB6 = 0, 320 MHz is indicated. When B3 = 1 and BSB6 = 1-3, a reserved bandwidth is indicated. In this indication method, the EHT station uses one more bit than the VHT station and the HE station to indicate the bandwidth. A peak-to-average power ratio (peak-to-average power ratio, PAPR) of a transmitted frame is affected by transmitted data content and the scrambling sequence. The transmitted data content cannot be controlled. However, when randomness of the scrambling sequence is reduced, a high PAPR is more likely to occur, affecting system performance. Therefore, in the described indication method, more bits are occupied for indication, and the PAPR of the sent frame increases, thereby reducing system performance.

In another conventional technology, as shown in Table 4, one bit (EHT bandwidth indication in Table 4) of the non-HT frame or the non-HT duplicated frame and B5B6 in the first seven bits of the scrambling sequence indicate the 320 MHz bandwidth. The EHT bandwidth indication is set to 1 and B5B6 in the first seven bits of the scrambling sequence indicates the 320 MHz mode.

**Table 4**

| EHT bandwidth indication | BSB6 | BW |
|---|---|---|
| 0 | 0 | 20 MHz |
| 0 | 1 | 40 MHz |
| 0 | 2 | 80 MHz |
| 0 | 3 | 160 MHz or 80+80 MHz |
| 1 | 0 | 320 MHz |
| 1 | 1-3 | Reserved |

As shown in Table 4, when the EHT bandwidth indication = 0, and BSB6 = 0-3 in the scrambling sequence, 20 MHz, 40 MHz, 80 MHz, and 160 (80+80) MHz are respectively indicated. When the EHT bandwidth indication = 1, and BSB6 = 0 in the scrambling sequence, 320 MHz is indicated. When the EHT bandwidth indication = 1 and BSB6 = 1-3, the reserved bandwidth is indicated. In this indication method, the EHT bandwidth indication and two bits of the scrambling sequence indicate a channel bandwidth, and the newly added EHT bandwidth indication bit causes a waste of signaling. In this way, more bits are occupied for indication, and the PAPR of the sent frame increases.

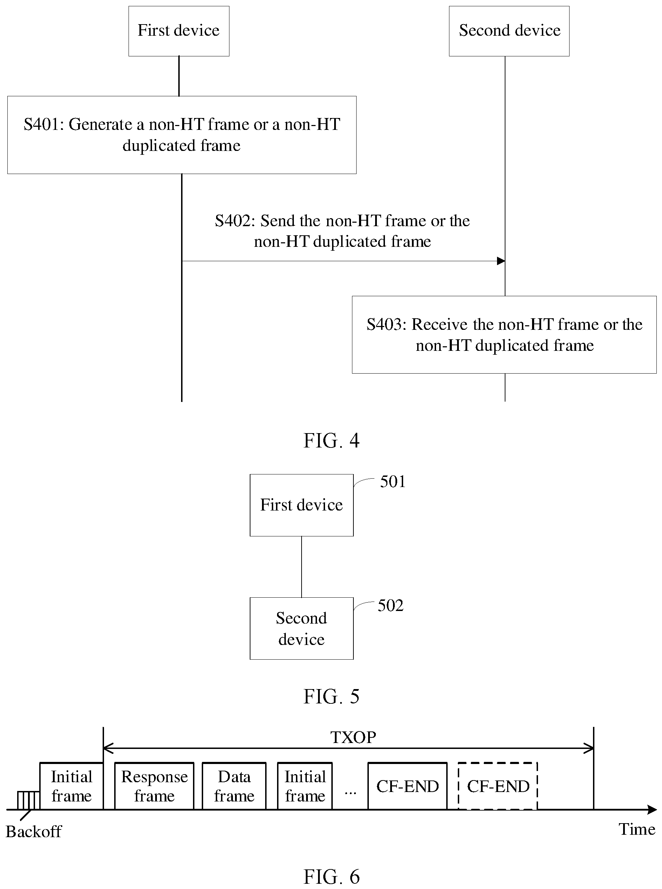

FIG. 4 is a schematic flowchart of an indication method 400 according to an embodiment of this application. The indication method 400 includes, but is not limited to, the following steps:
S401: A first device generates a non-HT frame or a non-HT duplicated frame.
S402: The first device sends the non-HT frame or the non-HT duplicated frame to a second device.
S403: The second device receives the non-HT frame or the non-HT duplicated frame.

An embodiment of this application provides a bandwidth indication method. In an indication manner, the bandwidth indication method includes: A first device generates a first frame, where the first frame includes a non-high throughput non-HT frame or a non-high throughput duplicated non-HT duplicated frame, the first frame includes a first bit, a second bit, and a third bit, and the first bit and the second bit are bits in a scrambling sequence of the first frame; and
if a first channel bandwidth of the first frame is indicated, the third bit is a first value, and the first bit and the second bit indicate that the first channel bandwidth is one of 20 MHz, 40 MHz, 80 MHz, or 160 MHz; or
if a second channel bandwidth of the first frame is indicated, the third bit is a second value and indicates the second channel bandwidth, at least one of the first bit and the second bit does not indicate the second channel bandwidth, and the second channel bandwidth is a bandwidth greater than 160 MHz;
the first device sends the first frame to a second device; and
the second device receives the first frame sent by the first device, where
if the third bit is a first value, the second device determines, based on the first bit and the second bit, that a bandwidth of the first frame is the first channel bandwidth, and the first channel bandwidth is one of 20 MHz, 40 MHz, 80 MHz, or 160 MHz; or
if the third bit is a second value, the second device determines, based on the third bit, that a bandwidth of the first frame is the second channel bandwidth, at least one of the first bit and the second bit does not indicate the second channel bandwidth, and the second channel bandwidth is a bandwidth greater than 160 MHz.

In another indication method, the indication method includes the following steps:

A first device generates a first frame, where the first frame is a non-high throughput non-HT frame or a non-high throughput duplicated non-HT duplicated frame, the first frame includes a first bit, a second bit, and a third bit, the first bit and the second bit are bits in a scrambling sequence of the first frame, and the first device is a station that supports a bandwidth greater than 160 MHz, including an extremely high throughput EHT station that supports the 802.11be standard; and
if the second device is a station that supports only a bandwidth less than or equal to 160 MHz, the first bit and the second bit indicate a first channel bandwidth, the first channel bandwidth is one of 20 MHz, 40 MHz, 80 MHz, or 160 MHz, and the third bit does not indicate the first channel bandwidth; or
if the second device is a station that supports a bandwidth greater than 160 MHz, when the first channel bandwidth of the first frame is indicated, the third bit is a first value, and the first bit and the second bit indicate that the first channel bandwidth is one of 20 MHz, 40 MHz, 80 MHz, and 80+80 MHz or 160 MHz; or when the second channel bandwidth of the first frame is indicated, the third bit is a second value and indicates the second channel bandwidth, at least one of the first bit and the second bit does not indicate the second channel bandwidth, and the second channel bandwidth is a bandwidth greater than 160 MHz;
the first device sends the first frame to a second device; and
the second device receives the first frame sent by the first device, where
if the second device is a station that supports only a bandwidth less than or equal to 160 MHz, the second device determines, based on the first bit and the second bit, that a bandwidth of the first frame is a first channel bandwidth, the first channel bandwidth is one of 20 MHz, 40 MHz, 80 MHz, or 160 MHz, and the third bit does not indicate the first channel bandwidth; or
if the second device is a station that supports a bandwidth greater than 160 MHz, when the third bit is a first value, the second device determines, based on the first bit and the second bit, that a bandwidth of the first frame is a first channel bandwidth, and the first channel bandwidth is one of 20 MHz, 40 MHz, 80 MHz, and 80+80 MHz or 160 MHz; or when the third bit is a second value, the second device determines, based on the third bit, that a bandwidth of the first frame is a second channel bandwidth, at least one of the first bit and the second bit does not indicate the second channel bandwidth, and the second channel bandwidth is a bandwidth greater than 160 MHz.

For ease of description and clarity and brevity, the foregoing indication method is a schematic flowchart of the bandwidth indication method 400 provided in FIG. 4. Steps in the two indication methods are the same as those in the bandwidth indication method 400. For ease of description, a first device and a second device in different indication methods are not distinguished, but may alternatively be a third device and a fourth device, a fifth device and a sixth device, or the like. In the same indication method, the first frame, the first bit, the second bit, the third bit, and the like are not distinguished for a same reason. This is not limited herein. In different indication methods, a same name may represent different meanings and specific implementation methods. Different indication methods may have different implementations, and for ease of use, the same description is still provided herein.

According to the bandwidth indication method provided above, at least one of the first bit and the second bit does not indicate the second channel bandwidth. In other words, one or two of the first bit and the second bit are not used to carry bandwidth information, or are used to carry non-bandwidth information. This can save indication bits indicating the channel bandwidth, improve randomness of the scrambling sequence, reduce a peak-to-average power ratio in data transmission, and improve communication system performance. In addition, saved indication bits may be used to indicate a new bandwidth, or may be used for another purpose.

Specifically, the first bit and the second bit are the B5 bit and the B6 bit in the first seven bits of the scrambling sequence, and the second channel bandwidth is 320 MHz. Using B5B6 for bandwidth indication is applicable to a bandwidth indication supporting device of previous generations of standard versions, has high compatibility, and is convenient to operate in practice. 160 MHz in the first channel bandwidth includes continuous 160 MHz, or non-continuous 80+80 MHz.

The first device is a station that supports a bandwidth greater than 160 MHz. For example, the station that supports a bandwidth greater than 160 MHz includes an extremely high throughput EHT station that supports the 802. 1 The standard, and also includes a station in a next-generation standard.

The third bit may be any one of the following:
any one of a B0 bit, a B 1 bit, a B2 bit, and a B3 bit in the first seven bits of the scrambling sequence, one bit in reserved service bits (Reserved SERVICE Bits), one bit in a receiver address RA field, or one bit in a Frame Control field. When the third bit is any one of B0 to B3 in the first seven bits of the scrambling sequence, no additional signaling indication is required outside the scrambling sequence, so that signaling overheads can be reduced. When the third bit is a bit of another field, bit overheads of the scrambling sequence are not increased. This can improve randomness of the scrambling sequence, reduce a peak-to-average power ratio in data transmission, and improve communication system performance.

When the second channel bandwidth of the first frame is indicated, that the third bit is a second value, and at least one of the first bit and the second bit does not indicate the second channel bandwidth, includes:

In a possible implementation, values of the first bit and the second bit are random values. Only one bit (the third bit) indicates the channel bandwidth greater than 160 MHz, and the first bit and the second bit are set to random values instead of indicating the second channel bandwidth. This can save bits in the scrambling sequence, improve randomness of the scrambling sequence, reduce a peak-to-average power ratio in data transmission, and improve communication system performance.

In another possible implementation, the first bit indicates the second channel bandwidth or a reserved bandwidth, and the second bit is a random value. For example, the first bit is a third value and indicates the second channel bandwidth, the first bit is a fourth value and indicates the reserved bandwidth, and the second bit is the random value. Alternatively, the second bit indicates the second channel bandwidth or a reserved bandwidth, and the first bit is a random value. For example, the second bit is a third value and indicates the second channel bandwidth, the second bit is a fourth value and indicates the reserved bandwidth, and the first bit is the random value. In this implementation, the third bit and the first bit (or the second bit) indicate the second channel bandwidth, and the second bit (or the first bit) is set to the random value. This can save scrambling bits indicating the channel bandwidth, improve randomness of the scrambling sequence, reduce a peak-to-average power ratio in data transmission, and improve communication system performance. Saved indication bits (bits not for indicating the second channel bandwidth) may be further reserved for another purpose. In addition, another value of the third bit may be used to indicate the reserved bandwidth or a new bandwidth, or may be used for another purpose.

The bandwidth indicated in the bandwidth indication method provided in this application is a channel bandwidth used for frame transmission, or a bandwidth occupied by a frame, and sometimes is also referred to as a bandwidth of a frame. In a communication process, the receiving station determines, based on indicated bandwidth information, how to set a bandwidth of a response frame.

For example, the first value is 0, and the second value is 1. Alternatively, the first value is 1, and the second value is 0. Details are not described below.

For example, the third value is 0, and the fourth value is 1. Alternatively, the third value is 1, and the fourth value is 0. Details are not described below.

In this application, setting of the value of the bit indicating the channel bandwidth is merely an example for description. In an actual case, the value is set to 1 or 0, and corresponding replacement is not limited in this application.

An embodiment of this application provides a communication system. As shown in FIG. 5, the communication system includes:
a first device 501 and a second device 502, where there is at least one channel between the first device 501 and the second device 502, and each of the at least one channel corresponds to one bandwidth.

For example, the bandwidth may include a bandwidth of 20 megabytes, a bandwidth of 40 megabytes, a bandwidth of 80 megabytes, a bandwidth of 160 (80+80) megabytes, a bandwidth of 240 megabytes, a bandwidth of 320 megabytes, and the like. In other words, the channel bandwidth is 20 MHz, 40 MHz, 80 MHz, 160 (80+80) MHz, 240 MHz, 320 MHz, and the like.

Each channel includes at least one subchannel. When the channel includes one 20 MHz subchannel, the first device generates a frame in a non-HT format; or when the channel includes multiple 20 MHz subchannels, the first device generates a frame in a non-HT duplicated format. For example, sometimes a bandwidth of a subchannel may be greater than or equal to 20 MHz. In other words, each channel includes at least one subchannel, and bandwidths of the subchannels may be the same or different.

Specifically, the bandwidth indication method provided in this application is as follows: A non-HT frame or a non-HT duplicated frame includes a first bit, a second bit, and a third bit. When the third bit is a first value, the first bit and the second bit indicate that the channel bandwidth is one of 20 MHz, 40 MHz, 80 MHz, or 160 MHz. When the third bit is a second value, it may indicate that the channel bandwidth is a bandwidth greater than 160 MHz. In this case, the first bit and the second bit may be set to a random value, any value, a reserved value, or a default value. The bandwidth indication method provided in this application can reduce a quantity of bits for bandwidth indication, retain randomness of original scrambling, and increase a PAPR. In addition, saved indication bits may be reserved for another purpose. The first bit and the second bit are a B5 bit and a B6 bit in the first seven bits of a scrambling sequence. The third bit may be any one of a B0 bit, a B 1 bit, a B2 bit, and a B3 bit in the first seven bits of the scrambling sequence, one bit in reserved service bits, one bit in a receiver address RA field, or one bit in a control frame field. In this application, the reserved service bits may be Reserved SERVICE Bits, and the control frame field may be a Frame Control field. This is used as an example for description. This is not limited herein.

For example, the third bit is any one of the B0 bit, the B 1 bit, the B2 bit, and the B3 bit in the first seven bits of the scrambling sequence, and the first bit and the second bit are the B5 bit and the B6 bit in the first seven bits of the scrambling sequence. Embodiments of this application provide a bandwidth indication method for description.

In an embodiment, when the first device is associated with the second device, the second device sends a device type of the second device to the first device, and the first device sends a device type of the first device to the second device. Therefore, before this step is performed, the first device and the second device each store a device type of the peer party. The first device may obtain the device type of the second device stored in the first device.

For example, the device type may be an extremely high throughput (Extremely High Throughput, EHT) station, or a station in a next-generation standard, namely, a station that supports a bandwidth greater than 160 MHz. Alternatively, the device type may be a very high throughput (Very High Throughput, VHT) station or a high efficiency (High efficiency, HE) station that does not support an EHT, namely, a station that supports only a bandwidth less than or equal to 160 MHz.

The device type of the first device is a station that supports a bandwidth greater than 160 MHz, including an extremely high throughput EHT station that supports the 802. 1 1be standard, and also including a station in a next-generation standard. For the second device whose device type is an EHT station, the second device supports using any one (the third bit) of the B0 bit, the B 1 bit, the B2 bit, and the B3 bit in the first seven bits of the scrambling sequence and the B5 bit and the B6 bit (the first bit and the second bit) in the first seven bits of the scrambling sequence to indicate a channel bandwidth. For the second device whose device type is a VHT station or an HE station that does not support an EHT, the second device supports using the B5 bit and the B6 bit in the first seven bits of the scrambling sequence to indicate a channel bandwidth.

In this embodiment of this application, it is stipulated in the standard or the first device and the second device may agree in advance that when the second device is a device of an EHT station, the first device uses any one of the B0 bit, the B 1 bit, the B2 bit, and the B3 bit in the first seven bits of the scrambling sequence and the B5 bit and the B6 bit in the first seven bits of the scrambling sequence to indicate a channel bandwidth. In addition, when the second device is a device of a VHT station or an HE station that does not support an EHT, the first device uses the B5 bit and the B6 bit in the first seven bits of the scrambling sequence to indicate a channel bandwidth.

The channel is any channel between the second device and the first device. There may be at least one channel between the second device and the first device, and each of the at least one channel corresponds to one bandwidth. The channel includes at least one 20 MHz subchannel. When the channel includes one 20 MHz subchannel, the first device generates a frame in a non-HT format; or when the channel includes multiple 20 MHz subchannels, the first device generates a frame in a non-HT duplicated format.

In addition to the four types of bandwidths: a 20 MHz bandwidth, a 40 MHz bandwidth, an 80 MHz bandwidth, and a 160 MHz bandwidth, the bandwidth in this application may further include new bandwidths such as a 320 MHz bandwidth. For example, in addition to the four types of bandwidths: a 20 MHz bandwidth, a 40 MHz bandwidth, an 80 MHz bandwidth, and a 160 (80+80) MHz bandwidth, a currently occurring bandwidth may further include new bandwidths such as a 240 MHz bandwidth and a 320 MHz bandwidth.

In this embodiment, any one of the B0 bit, the B 1 bit, the B2 bit, and the B3 bit in the first seven bits of the scrambling sequence and the B5 bit and the B6 bit in the first seven bits of the scrambling sequence may be used to indicate a channel bandwidth. For any bandwidth such as a 20 MHz bandwidth, a 40 MHz bandwidth, an 80 MHz bandwidth, a 160 (80+80) MHz bandwidth, or a 320 MHz bandwidth, specifically, any one of the B0 bit, the B 1 bit, the B2 bit, and the B3 bit in the first seven bits of the scrambling sequence and the B5 bit and the B6 bit in the first seven bits of the scrambling sequence may be used to indicate the 20 MHz bandwidth, the 40 MHz bandwidth, the 80 MHz bandwidth, and the 160 (80+80) MHz bandwidth of a channel. Alternatively, any one of the B0 bit, the B 1 bit, the B2 bit, and the B3 bit in the first seven bits of the scrambling sequence may be used to indicate a 320 MHz bandwidth of a channel. In this case, the B5 bit and the B6 bit in the first seven bits of the scrambling sequence do not indicate the 320 MHz bandwidth, and may be set to a random value or any value, or a reserved value or a default value. Alternatively, any one of the B0 bit, the B 1 bit, the B2 bit, and the B3 bit in the first seven bits of the scrambling sequence and any one of the B5 bit and the B6 bit in the first seven bits of the scrambling sequence may be used to indicate a 320 MHz bandwidth of a channel. In this case, the other one, of the B5 bit and the B6 bit, that does not indicate the bandwidth in the first seven bits of the scrambling sequence may be set to a random value or any value, or a reserved value or a default value. In other words, if at least one bit in B5B6 does not indicate the 320 MHz bandwidth, the bit may be used for another purpose. For example, the bit may be set to a random value. This can retain randomness of original scrambling, and increase a PAPR. Alternatively, the bit may be set to a reserved value or a default value, to indicate another possible channel bandwidth, or is reserved for another purpose.

In an implementation, as described in Table 5, the B3 bit is used as an example to describe a case in which a bandwidth greater than 160 MHz is indicated. Herein, 320 MHz is used as an example. Another bandwidth such as 240 MHz may alternatively be used. In practice, a bit indicating a bandwidth greater than 160 MHz may also be one bit in B0 to B2. Specifically, the B3 bit in the first seven bits of the scrambling sequence and the B5 bit and the B6 bit in the first seven bits of the scrambling sequence may be used to indicate the 20 MHz bandwidth, the 40 MHz bandwidth, the 80 MHz bandwidth, and the 160 (80+80) MHz bandwidth of the channel. Alternatively, the B3 bit in the first seven bits of the scrambling sequence may be used to indicate the 320 MHz bandwidth of the channel.

**Table 5**

| Bandwidth | B3 | BSB6 |
|---|---|---|
| CBW20 | 0 | 0 |
| CBW40 | 0 | 1 |
| CBW80 | 0 | 2 |
| CBW160 or CBW80+80 | 0 | 3 |
| CBW320 | 1 | Random value |

As shown in Table 5, when B3 is set to 0, and B5B6 is 0-3, 20 MHz, 40 MHz, 80 MHz, and 160 (80+80) MHz are respectively indicated, where B5 is a least significant bit, and B6 is a most significant bit. Specifically, when B3 = 0, B5 = 0, and B6 = 0, 20 MHz is indicated; when B3 = 0, B5 = 1, and B6 = 0, 40 MHz is indicated; when B3 = 0, B5 = 0, and B6 = 1, 80 MHz is indicated; or when B3 = 0, B5 = 1, and B6 = 1, 160 MHz or 80+80 MHz is indicated. When B3 is set to 1, it indicates that a bandwidth of a current frame is 320 MHz. In this case, B5B6 does not indicate bandwidth information, and may be set to a random value.

In the bandwidth indication method provided in this embodiment of this application, only one bit may be used to indicate the 320 MHz bandwidth, and two indication bits may be saved compared with using B3BSB6 to indicate a 320 MHz bandwidth. The two saved indication bits may be set to random values. This can improve randomness of the scrambling sequence, and reduce a PAPR in data transmission. In addition, the two saved indication bits may alternatively be reserved for another purpose.

In another implementation, as shown in Table 6, the B3 bit and the B6 bit are used as an example to describe a case in which a bandwidth greater than 160 MHz is indicated. Herein, 320 MHz is used as an example. Another bandwidth such as 240 MHz may alternatively be used. In practice, B3 may alternatively be a bit in B0 to B2, and B6 may alternatively be B5. Specifically, the B3 bit in the first seven bits of the scrambling sequence and the B5 bit and the B6 bit in the first seven bits of the scrambling sequence may be used to indicate the 20 MHz bandwidth, the 40 MHz bandwidth, the 80 MHz bandwidth, and the 160 (80+80) MHz bandwidth of the channel. Alternatively, the B3 bit in the first seven bits of the scrambling sequence and the B5 bit in the first seventh bits of the scrambling sequence may be used to indicate the 320 MHz bandwidth of the channel.

**Table 6**

| Bandwidth | B3 | B6 | B5 |
|---|---|---|---|
| CBW20 | 0 | 0 | 0 |
| CBW40 | 0 | 0 | 1 |
| CBW80 | 0 | 1 | 0 |
| CBW160 or CBW80+80 | 0 | 1 | 1 |
| CBW320 | 1 | 0 | Random value |
| Reserved | 1 | 1 | Random value |

As shown in Table 6, when B3 is set to 0, and B5B6 is 0-3, 20 MHz, 40 MHz, 80 MHz, and 160 (80+80) MHz are respectively indicated, where B5 is a least significant bit, and B6 is a most significant bit. Specifically, when B3 = 0, B5 = 0, and B6 = 0, 20 MHz is indicated; when B3 = 0, B5 = 1, and B6 = 0, 40 MHz is indicated; when B3 = 0, B5 = 0, and B6 = 1, 80 MHz is indicated; or when B3 = 0, B5 = 1, and B6 = 1, 160 MHz or 80+80 MHz is indicated. When B3 is set to 1 and B6 is set to a third value (for example, 0), it indicates that the bandwidth of the current frame is 320 MHz. In this case, B5 does not indicate the bandwidth information, and may be set to a random value. When B3 is set to 1 and B6 is set to a fourth value (for example, 1), the bit may be used to indicate the reserved bandwidth, for example, 240 MHz, or may be used for another purpose. In this case, B5 does not indicate the bandwidth information, and may be set to a random value.

In the bandwidth indication method provided in this embodiment of this application, only two bits may be used to indicate the 320 MHz bandwidth, and one indication bit may be saved compared with using B3BSB6 to indicate a 320 MHz bandwidth. The saved indication bit may be set to a random value. This can improve randomness of the scrambling sequence, and reduce a PAPR in data transmission. In addition, the saved indication bit may alternatively be reserved for another purpose. Similarly, in the bandwidth indication manner, a reserved bandwidth state is further reserved, and may be used to indicate a new bandwidth, or may be used for another purpose.

When the device type of the second device is a VHT station or an HE station that does not support an EHT, the second device supports using the B5 bit and the B6 bit in the first seven bits of the scrambling sequence to indicate a channel bandwidth. The channel is any channel between the second device and the first device. There may be at least one channel between the second device and the first device, and each of the at least one channel corresponds to one bandwidth. The channel includes at least one 20 MHz subchannel. When the channel includes one 20 MHz subchannel, the first device generates a frame in a non-HT format; or when the channel includes multiple 20 MHz subchannels, the first device generates a frame in a non-HT duplicated format.

For example, the bandwidth indicated by the B5 bit and the B6 bit in the first seven bits of the scrambling sequence may be any one of the 20 MHz bandwidth, the 40 MHz bandwidth, the 80 MHz bandwidth, and the 160 (80+80) MHz bandwidth. The indication manner is described in Table 2.

The first device generates a non-HT frame or a non-HT duplicated frame according to the bandwidth indication method provided in this embodiment of this application, and sends the non-HT frame or the non-HT duplicated frame to the second device, and the second device receives the non-HT frame or the non-HT duplicated frame.

When the device type of the second device is a station that supports a bandwidth greater than 160 MHz, the second device includes an extremely high throughput EHT station that supports the 802.11be standard, and also includes a station in a next-generation standard. For example, the second device is an EHT station. The second device receives a non-HT frame or a non-HT duplicated frame, and the bandwidth of the sent frame is determined in an implementation of a bandwidth indication manner used by the first device.

In an implementation, when any one of the B0 bit, the B 1 bit, the B2 bit, and the B3 bit in the first seven bits of the scrambling sequence is used to indicate the 320 MHz bandwidth of the channel, if the any one of the B0 bit, the B 1 bit, the B2 bit, and the B3 bit in the first seven bits of the scrambling sequence that indicates the channel bandwidth is enabled (for example, set to 1), the B5 bit and the B6 bit in the first seven bits of the scrambling sequence are not required, and the channel bandwidth is 320 MHz; or if the any one of the B0 bit, the B1 bit, the B2 bit, and the B3 bit in the first seven bits of the scrambling sequence that indicates the channel bandwidth is disabled (for example, set to 0), values of the B5 bit and the B6 bit in the first seven bits of the scrambling sequence are used to determine the channel bandwidth indicated by the two bits, that is, determine which one of 20 MHz, 40 MHz, 80 MHz, and 160 (80+80) MHz is the indicated channel bandwidth.

In another implementation, when any one of the B0 bit, the B1 bit, the B2 bit, and the B3 bit in the first seven bits of the scrambling sequence and any one of the B5 bit and the B6 bit in the first seven bits of the scrambling sequence are used to indicate the 320 MHz bandwidth of the channel, if the any one of the B0 bit, the B 1 bit, the B2 bit, and the B3 bit in the first seven bits of the scrambling sequence that indicates the channel bandwidth is enabled (for example, set to 1), the other bit in the B5 bit and the B6 bit in the first seven bits of the scrambling sequence is not required. When the any one of the B5 bit and the B6 bit in the first seven bits of the scrambling sequence is a third value, the channel bandwidth is 320 MHz; or when the any one of the B5 bit and the B6 bit in the first seven bits of the scrambling sequence is a fourth value, the indicated channel bandwidth is a reserved value. Alternatively, if the any one of the B0 bit, the B 1 bit, the B2 bit, and the B3 bit in the first seven bits of the scrambling sequence used to indicate the channel bandwidth is disabled (for example, set to 0), values of the B5 bits and the B6 bits in the first seven bits of the scrambling sequence are used to determine the channel bandwidth indicated by the two bits, that is, determine which one of 20 MHz, 40 MHz, 80 MHz, and 160 (80+80) MHz is the indicated channel bandwidth.

When the device type of the second device is a VHT station or an HE station that does not support an EHT, the second device receives the non-HT frame or the non-HT duplicated frame, obtains the B5 bit and the B6 bit that indicate the channel bandwidth and that are in the first seven bits of the scrambling sequence in the non-HT frame or the non-HT duplicated frame, and determines the channel bandwidth indicated by the two bits, that is, determines which one of 20 MHz, 40 MHz, 80 MHz, and 160 (80+80) MHz is the channel bandwidth indicated by the two bits.

For example, in this embodiment of this application, setting of the value of the bit indicating the channel bandwidth is merely an example for description. In an actual case, the value is set to 1 or 0, and corresponding replacement is not limited in this application.

For example, in this embodiment of this application, station types of the first device and the second device need to be first determined, and channel bandwidth is indicated by using different bit locations based on differentiation between an EHT station and a VHT/HE station. In other words, if both the first device and the second device are an EHT station that supports a bandwidth greater than 160 MHz, the third bit indicates the bandwidth of the EHT station, for example, the B3 bit in the foregoing embodiment. If at least one of the first device or the second device is a VHT/HE station that supports only a bandwidth less than or equal to 160 MHz, the third bit does not indicate a bandwidth greater than 160 MHz, and still has an original meaning or is used for another purpose. Therefore, this indication manner may be referred to as an implicit indication method, and is not limited in embodiments of this application.

In this application, the station that supports a bandwidth greater than 160 MHz includes an extremely high throughput EHT station that supports the 802. 1 1be standard, a station in another name of the 802. 1 1be standard, and a station in a next-generation standard. Therefore, the name of the station in this application is not limited by the standard or other manner, including the implementation of the same function.

In an embodiment in which the station type of the first device is used to distinguish whether the third bit indicates the bandwidth, special processing needs to be performed on a CF-END frame. The following describes the functions and application scenarios of the CF-END frame. In a Wi-Fi system, a channel resource is shared by multiple stations by using a contention mechanism. As shown in FIG. 6, a station that needs to send data performs channel contention by using an enhanced distributed channel access (enhanced distributed channel access, EDCA) mechanism. After backoff ends, the station sends an initial frame. If a response frame of the initial frame can be correctly received, it means that channel contention succeeds. A time length is set in a duration (Duration) field of the initial frame, and the time length is calculated from an end moment of the initial frame. In the time length, another station does not initiate channel contention. This ensures that a station that succeeds in contention can exclusively use the time period to send data. The time period is referred to as a TXOP, and the station that succeeds in contention is referred to as a TXOP holder. The TXOP holder can initiate one or more frame interactions within a TXOP. After the TXOP holder finishes sending buffered data, if there is still remaining time in the TXOP, the TXOP holder may send a CF-END frame to release the remaining time in the TXOP, so that other stations can perform channel contention.

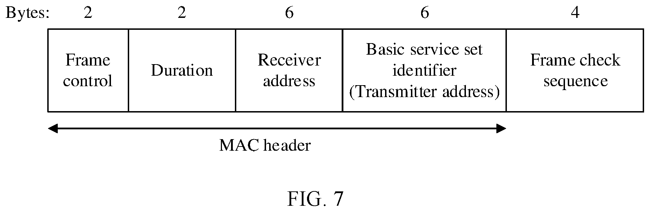

A frame structure of the CF-END frame is shown in FIG. 7, and includes a frame control (frame control) field, a duration (duration) field, a receiver address (RA) field, a transmitter address (TA) field, a frame check sequence (frame check sequence, FCS) field, and the like. The receiver address (RA) field is set to a broadcast frame, that is, all 1s. The transmitter address TA field is set to a basic service set identifier BSSID, and is set to a BSSID of a basic service set BSS in which the transmitter address TA field is located. The BSS is a system established by an AP, and includes a unique AP, where the AP may be associated with one or more stations. A BSSID is a unique identifier of a BSS, and is usually a MAC address of an AP.

If the TXOP holder is an AP, the TXOP holder sends a CF-END frame. In this case, a TA field in the sent CF-END frame is the BSSID, namely, the MAC address of the AP. For an executed method, refer to the method provided in the foregoing embodiment. If the TXOP holder is a non-AP station, the TXOP holder first sends a CF-END frame. After the AP associated with the TXOP holder receives the CF-END frame, the associated AP may send a response CF-END frame after an SIFS elapses.

After receiving a CF-END frame in which a BSSID (TA) field matches a BSSID of the AP (with an Individual/Group bit not compared), the AP may respond with a CF-END frame, and the response CF-END frame uses a same bandwidth as the received CF-END frame. The Individual/Group bit is not compared herein because the Individual/Group bit may indicate and carry bandwidth indication information and is set to 1, and therefore does not match the BSSID. In this case, the Individual/Group bit is ignored during comparison. If other remaining bits are the same, it is considered that the matching is successful. A problem herein is that when a non-AP station sends a CF-END frame, the frame does not have a MAC address of the non-AP station. In this case, after receiving the CF-END frame, the AP cannot learn, from a frame format, which station sends the CF-END frame, and consequently, cannot determine whether a third bit in the received CF-END frame indicates a bandwidth. The method for indicating a bandwidth by using a third bit provided in the foregoing embodiment is not applicable to the CF-END frame sent by the non-AP station. In other words, in this embodiment of this application, special processing needs to be performed on the CF-END frame mainly for a case in which a TXOP holder is a non-AP station, and two solutions are proposed to resolve a problem that the method provided in the foregoing embodiment is not applicable.

In a first solution, after receiving a CF-END frame in which a BSSID (TA) field matches a BSSID of an AP (with an Individual/Group bit not compared), the AP determines a TXOP holder in a current BSS. If the TXOP holder is an EHT station, a third bit in the received CF-END frame is used to indicate a bandwidth. If the TXOP holder is a VHT station or an HE station, a third bit in the received CF-END frame does not indicate the bandwidth. In other words, B6B5 in the first seven bits of the scrambling sequence is used to indicate the bandwidth. Because there can be only one TXOP holder in the BSS at a same moment, a determining error of the sending station can be avoided.

In a second solution, an AP records a bandwidth of a TXOP in a current BSS. After receiving a CF-END frame in which a BSSID (TA) field matches a BSSID of the AP (with an Individual/Group bit not compared), the AP does not need to interpret bandwidth indication information, and it is considered that a bandwidth of the CF-END frame is equal to the bandwidth of the TXOP. In the second solution, it is required that the TXOP holder should use the TXOP bandwidth to send the CF-END frame.

After the bandwidth information is identified, the AP sends a CF-END frame of a same bandwidth an SIFS after the end moment of the received CF-END frame.

An embodiment of this application further provides a bandwidth indication method. An example in which a third bit is one bit in one of the following: reserved service bits Reserved SERVICE Bits, a receiver address RA field, or an existing field in a multiplexed Frame Control field, and a first bit and a second bit are a B5 bit and a B6 bit in the first seven bits of a scrambling sequence is used for description.

In other words, in this embodiment of this application, a non-HT frame or a non-HT duplicated frame indicates a channel bandwidth by using one bit (the third bit) in one of the following: the reserved service bits Reserved SERVICE Bits, the receiver address RA field, or the existing field in the multiplexed Frame Control field and by using the B5 bit and the B6 bit (the first bit and the second bit) in the first seven bits of the scrambling sequence.

In this application, the bit in one of the following: the reserved service bits Reserved SERVICE Bits, the receiver address RA field, or the existing field in the multiplexed Frame Control field for indicating the channel bandwidth in the non-HT frame or the non-HT duplicated frame is referred to as an EHT bandwidth signaling indication. A name of the indication bit or the indication field is merely an example, and is not limited in this application.

For example, in addition to the four types of bandwidths: a 20 MHz bandwidth, a 40 MHz bandwidth, an 80 MHz bandwidth, and a 160 (80+80) MHz bandwidth, a currently occurring bandwidth further includes new bandwidths such as a 240 MHz bandwidth and a 320 MHz bandwidth. In this embodiment, the EHT bandwidth signaling indication and the B5 bit and the B6 bit in the first seven bits of the scrambling sequence may be used to indicate a channel bandwidth. For any bandwidth such as a 20 MHz bandwidth, a 40 MHz bandwidth, an 80 MHz bandwidth, a 160 (80+80) MHz bandwidth, or a 320 MHz bandwidth, specifically, the EHT bandwidth signaling indication and the B5 bit and the B6 bit in the first seven bits of the scrambling sequence may be used to indicate the 20 MHz bandwidth, the 40 MHz bandwidth, the 80 MHz bandwidth, and the 160 (80+80) MHz bandwidth of a channel. Alternatively, the EHT bandwidth signaling indication may be used to indicate a 320 MHz bandwidth of a channel. In this case, the B5 bit and the B6 bit in the first seven bits of the scrambling sequence do not indicate the 320 MHz bandwidth, and may be set to a random value or any value, or a reserved value or a default value. Alternatively, the EHT bandwidth signaling indication and any one of the B5 bit and the B6 bit in the first seven bits of the scrambling sequence may be used to indicate a 320 MHz bandwidth of a channel. In this case, the other one, of the B5 bit and the B6 bit, that does not indicate the bandwidth in the first seven bits of the scrambling sequence may be set to a random value or any value, or a reserved value or a default value. In other words, if at least one bit in B5B6 does not indicate the 320 MHz bandwidth, the bit may be used for another purpose. For example, the bit may be set to a random value. This can retain randomness of original scrambling, and increase a PAPR. Alternatively, the bit may be set to a reserved value or a default value, to indicate another possible channel bandwidth, or is reserved for another purpose.

For example, the device type may be an extremely high throughput (Extremely High Throughput, EHT) station, or the device type may be a very high throughput (Very High Throughput, VHT) station or a high efficiency (High efficiency, HE) station that does not support an EHT. In this embodiment of this application, station types of the first device and the second device do not need to be determined, and a bandwidth indication manner may be determined by using the EHT bandwidth signaling indication.

In an implementation, the EHT bandwidth signaling indication is used as an example to describe a case in which a bandwidth greater than 160 MHz is indicated. Herein, 320 MHz is used as an example. Another bandwidth such as 240 MHz may alternatively be used. Specifically, the EHT bandwidth signaling indication and the B5 bit and the B6 bit in the first seven bits of the scrambling sequence may be used to indicate the 20 MHz bandwidth, the 40 MHz bandwidth, the 80 MHz bandwidth, and the 160 (80+80) MHz bandwidth of the channel. Alternatively, the EHT bandwidth signaling indication may be used to indicate the 320 MHz bandwidth of the channel. Specifically, when the EHT bandwidth signaling indication is set to be disabled, the B5 bit and the B6 bit in the first seven bits of the scrambling sequence use 0-3 to respectively indicate four bandwidths: 20 MHz, 40 MHz, 80 MHz, and 160 (80+80) MHz. When the EHT bandwidth signaling indication is set to be enabled, it may indicate that the current bandwidth is 320 MHz. Therefore, the B5 bit and the B6 bit in the first seven bits of the scrambling sequence or another bit or field does not need to be used to indicate the 320 MHz bandwidth. In other words, the B5 bit and the B6 bit in the first seven bits of the scrambling sequence no longer carry the bandwidth information, and may be set to a random value.

**Table 7**

| Bandwidth | EHT bandwidth indication | B5B6 |
|---|---|---|
| CBW20 | 0 | 0 |
| CBW40 | 0 | 1 |
| CBW80 | 0 | 2 |
| CBW160 or CBW80+80 | 0 | 3 |
| CBW320 | 1 | Random value |

As shown in Table 7, when the EHT bandwidth signaling indication is set to be disabled (for example, set to 0), and B5B6 is 0-3, 20 MHz, 40 MHz, 80 MHz, and 160 (80+80) MHz are respectively indicated, where B5 is a least significant bit, and B6 is a most significant bit. Specifically, when EHT bandwidth signaling = 0, B5 = 0, and B6 = 0, 20 MHz is indicated; when EHT bandwidth signaling = 0, B5 = 1, and B6 = 0, 40 MHz is indicated; when EHT bandwidth signaling = 0, B5 = 0, and B6 = 1, 80 MHz is indicated; or when EHT bandwidth signaling = 0, B5 = 1, and B6 = 1, 160 MHz or 80+80 MHz is indicated. When the EHT bandwidth signaling indication is set to be enabled (for example, set to 1), it indicates that a bandwidth of a current frame is 320 MHz. In this case, B5B6 does not indicate bandwidth information, and may be set to a random value.

In the bandwidth indication method provided in this embodiment of this application, only the EHT bandwidth signaling indication may be used to indicate the 320 MHz bandwidth, and two indication bits may be saved compared with using an explicit indication and B5B6 in a scrambling sequence to indicate a 320 MHz bandwidth. In addition, the scrambling sequence may not be used to indicate 320 MHz. This can improve randomness of the scrambling sequence, and reduce a PAPR in data transmission. In addition, the two saved indication bits may be reserved for another purpose.

In another implementation, the EHT bandwidth signaling indication and the B6 bit in the first seven bits of the scrambling sequence are used as an example to describe a case in which a bandwidth greater than 160 MHz is indicated. Herein, 320 MHz is used as an example. Another bandwidth such as 240 MHz may alternatively be used. Specifically, the EHT bandwidth signaling indication and the B5 bit and the B6 bit in the first seven bits of the scrambling sequence may be used to indicate the 20 MHz bandwidth, the 40 MHz bandwidth, the 80 MHz bandwidth, and the 160 (80+80) MHz bandwidth of the channel. Alternatively, the EHT bandwidth signaling indication and the B5 bit in the first seven bits of the scrambling sequence may be used to indicate the 320 MHz bandwidth of the channel. For example, the B5 bit in the first seven bits of the scrambling sequence may be the B5 bit in the first seven bits of the scrambling sequence.

**Table 8**

| Bandwidth | EHT bandwidth indication | B6 | B5 |
|---|---|---|---|
| CBW20 | 0 | 0 | 0 |
| CBW40 | 0 | 0 | 1 |
| CBW80 | 0 | 1 | 0 |
| CBW160 or CBW80+80 | 0 | 1 | 1 |
| CBW320 | 1 | 0 | Random value |
| Reserved | 1 | 1 | Random value |

As shown in Table 8, when the EHT bandwidth signaling indication is set to be disabled (for example, set to 0), and B5B6 is 0-3, 20 MHz, 40 MHz, 80 MHz, and 160 (80+80) MHz are respectively indicated, where B5 is a least significant bit, and B6 is a most significant bit. Specifically, when EHT bandwidth signaling = 0, B5 = 0, and B6 = 0, 20 MHz is indicated; when EHT bandwidth signaling = 0, B5 = 1, and B6 = 0, 40 MHz is indicated; when EHT bandwidth signaling = 0, B5 = 0, and B6 = 1, 80 MHz is indicated; or when EHT bandwidth signaling = 0, B5 = 1, and B6 = 1, 160 MHz or 80+80 MHz is indicated. When the EHT bandwidth signaling indication is set to be enabled (for example, set to 1) and B6 is set to a third value (for example, 0), it indicates that the bandwidth of the current frame is 320 MHz. In this case, B5 does not indicate the bandwidth information, and may be set to a random value. When the EHT bandwidth signaling indication is set to 1 and B6 is set to a fourth value (for example, 1), the bit may be used to indicate the reserved bandwidth, for example, 240 MHz, or may be used for another purpose. In this case, B5 does not indicate the bandwidth information, and may be set to a random value.

In the bandwidth indication method provided in this embodiment of this application, only two bits may be used to indicate the 320 MHz bandwidth, and one indication bit may be saved compared with using an explicit indication and B5B6 in a scrambling sequence to indicate a 320 MHz bandwidth. The saved indication bit in the scrambling sequence may be set to a random value. This can improve randomness of the scrambling sequence, and reduce a PAPR in data transmission. In addition, the saved indication bit may alternatively be reserved for another purpose. Similarly, in the bandwidth indication manner, a reserved bandwidth state is further reserved, and may be used to indicate a new bandwidth, or may be used for another purpose.

The first device generates a non-HT frame or a non-HT duplicated frame according to the bandwidth indication method provided in this embodiment of this application, and sends the non-HT frame or the non-HT duplicated frame to the second device, and the second device receives the non-HT frame or the non-HT duplicated frame.

In an implementation, when the EHT bandwidth signaling indication is used to indicate the 320 MHz bandwidth of the channel, if the EHT bandwidth signaling indication is enabled (for example, set to 1), the B5 bit and the B6 bit in the first seven bits of the scrambling sequence are not required, and the channel bandwidth is 320 MHz; or if the EHT bandwidth signaling indication is disabled (for example, set to 0), values of the B5 bit and the B6 bit in the first seven bits of the scrambling sequence are used to determine the channel bandwidth indicated by the two bits, that is, determine which one of 20 MHz, 40 MHz, 80 MHz, and 160 (80+80) MHz is the indicated channel bandwidth.

In another implementation, when the EHT bandwidth signaling indication and any one of the B5 bit and the B6 bit in the first seven bits of the scrambling sequence are used to indicate the 320 MHz bandwidth of the channel, if the EHT bandwidth signaling indication is enabled (for example, set to 1), the other bit in the B5 bit and the B6 bit in the first seven bits of the scrambling sequence is not required. When the any one of the B5 bit and the B6 bit in the first seven bits of the scrambling sequence is a fifth value, the channel bandwidth is 320 MHz; or when the any one of the B5 bit and the B6 bit in the first seven bits of the scrambling sequence is a sixth value, the indicated channel bandwidth is a reserved value. Alternatively, if the EHT bandwidth signaling indication is disabled (for example, set to 0), values of the B5 bit and the B6 bit in the first seven bits of the scrambling sequence are used to determine the channel bandwidth indicated by the two bits, that is, determine which one of 20 MHz, 40 MHz, 80 MHz, and 160 (80+80) MHz is the indicated channel bandwidth.

For example, in this embodiment of this application, the station types of the first device and the second device do not need to be determined before the channel bandwidth is indicated. In other words, the channel bandwidth is directly indicated by using the first bit, the second bit, and the third bit. Therefore, this indication manner may be referred to as an explicit indication method, and this is not limited in this embodiment of this application.

In this embodiment of this application, an information indication method for a non-HT frame or a non-HT duplicated frame is further provided. The information indication method is a preamble puncture (preamble puncture) mode. In another representation form, the preamble puncture mode may be referred to as a non-preamble puncture mode. The non-preamble puncture mode herein is a mode in which a preamble is not punctured. Before the first device performs data communication with the second device, the first device may perform puncturing on a channel of an indicated bandwidth. A punctured subchannel may be referred to as a secondary subchannel (secondary subchannel). The punctured secondary subchannel is unavailable, that is, cannot be used for data communication. A subchannel that is not punctured may be used for data communication. The secondary channel herein is also referred to as a secondary channel (secondary channel).

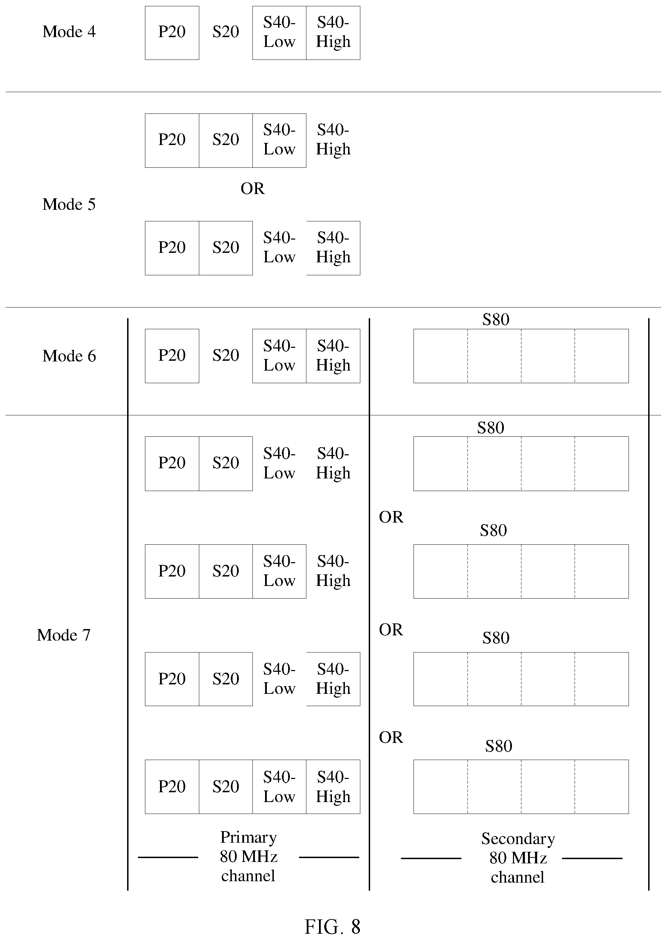

The preamble puncture defined in 802.11ax is four new channel modes, namely, a mode 4 to a mode 7, introduced in addition to the four bandwidths of 802.11ac. FIG. 8 is a schematic diagram of puncturing on a channel in the mode 4 to the mode 7. In the figure, P20 indicates a 20 MHz primary subchannel. The primary subchannel cannot be knocked off. S indicates a secondary subchannel, and Low and High indicate a low frequency and a high frequency. For example, S40-Low and S40-High are used to distinguish between two 20 MHz of an S40 subchannel. A dashed line in S80 indicates that a 20 MHz subchannel may be knocked off or may not be knocked off. The definition in the standard is as follows:

In the mode 4, puncturing is performed on an 80 MHz channel, and only a secondary 20 MHz channel (an S20 channel) is punctured.

In the mode 5, puncturing is performed on an 80 MHz channel, and only a 20 MHz channel (S40-Low or S40-High) in a secondary 40 MHz channel is punctured.

In the mode 6, puncturing is performed on a 160 MHz channel or an 80+80 MHz channel, only a secondary 20 MHz channel (an S20 channel) in a primary 80 MHz channel is punctured, and random puncturing may be performed on a secondary 80 MHz channel at a granularity of 20 MHz.

In the mode 7, puncturing is performed on a 160 MHz channel or an 80+80 MHz channel, a primary 40 MHz channel in a primary 80 MHz channel is available, and random puncturing may be performed on a secondary 40 MHz channel and a secondary 80 MHz channel at a granularity of 20 MHz.

Preamble puncture in 802.11ac is only for an orthogonal frequency division multiple access (orthogonal frequency division multiple access, OFDMA) mode. In 802.11be, the bandwidth is extended to 320 MHz, and a non-orthogonal frequency division multiple access (non-orthogonal frequency division multiple access, non-OFDMA) mode is added. For example, for the preamble puncture mode and the non-preamble puncture mode defined in 802.11be based on non-OFDMA, refer to Table 9. Table 9 shows 63 types of bandwidths. In Table 9, each of "1" and "x" corresponds to one 20 MHz channel, "1" indicates that a corresponding 20 MHz channel is idle, and "x" indicates that a corresponding 20 MHz channel is busy or unavailable (no available).

In this embodiment of this application, for a preamble puncture mode, a total bandwidth corresponding to the puncture mode is a bandwidth corresponding to a case in which preamble puncture is not performed. For example, the total bandwidth may be 20 MHz, 40 MHz, 80 MHz, 160 MHz (or 80+80 MHz), or 320 MHz (or 160+160 MHz).

**Table 9**

| Total bandwidth | Bandwidth | Number |
|---|---|---|
| 20 MHz | 1 | 1 |
| 40 MHz | 11 | 1 |
| 80 MHz | 1111 | 5 |
| | x111 | |
| | 1x11 | |
| | 11x1 | |
| | 111x | |
| 160 MHz | 1111 1111 | 13 |
| | x111 1111 | |
| | 1x11 1111 | |
| | 11x1 1111 | |
| | 111x 1111 | |
| | 1111 x111 | |
| | 1111 1x11 | |
| | 1111 11x1 | |
| | 1111 111x | |
| | xx11 1111 | |
| | 11xx 1111 | |
| | 1111 xx11 | |
| | 1111 11xx | |
| 320 MHz | 1111 1111 1111 1111 | 43 |
| | xx11 1111 1111 1111 | |
| | 11xx 1111 1111 1111 | |
| | 1111 xx11 1111 1111 | |
| | 1111 11xx 1111 1111 | |
| | 1111 1111 xx11 1111 | |
| | 1111 1111 11xx 1111 | |
| | 1111 1111 1111 xx11 | |
| | 1111 1111 1111 11xx | |
| | xxxx 1111 1111 1111 | |
| | 1111 xxxx 1111 1111 | |
| | 1111 1111 xxxx 1111 | |
| | 1111 1111 1111 xxxx | |
| | xxxx xx 11 1111 1111 | |
| | xxxx 11xx 1111 1111 | |
| | xxxx 1111 xx11 1111 | |
| | xxxx 1111 11xx 1111 | |
| | xxxx 1111 1111 xx11 | |
| | xxxx 1111 1111 11xx | |
| | xx11 xxxx 1111 1111 | |
| | 11xx xxxx 1111 1111 | |
| | 1111 xxxx xx11 1111 | |
| | 1111 xxxx 11xx 1111 | |
| | 1111 xxxx 1111 xx11 | |
| | 1111 xxxx 1111 11xx | |
| | xx11 1111 xxxx 1111 | |
| | 11xx 1111 xxxx 1111 | |
| | 1111 xx11 xxxx 1111 | |
| | 1111 11xx xxxx 1111 | |
| | 1111 1111 xxxx xx11 | |
| | 1111 1111 xxxx 11xx | |
| | xx11 1111 1111 xxxx | |
| | 11xx 1111 1111 xxxx | |
| | 1111 xx11 1111 xxxx | |
| | 1111 11xx 1111 xxxx | |
| | 1111 1111 xx11 xxxx | |
| | 1111 1111 11xx xxxx | |
| | xxxx xxxx 1111 1111 | |
| | xxxx 1111 xxxx 1111 | |
| | xxxx 1111 1111 xxxx | |
| | 1111 xxxx xxxx 1111 | |
| | 1111 xxxx 1111 xxxx | |
| | 1111 1111 xxxx xxxx | |

In this embodiment of this application, the preamble puncture mode is also referred to as a channel puncture bandwidth, or a preamble puncture bandwidth, or sometimes referred to as a bandwidth.

The preamble puncture indication may be implemented in the following manner:
In an implementation, the preamble puncture indication may be performed in a non-OFDMA mode. In other words, a plurality of bits indicate the non-OFDMA preamble puncture mode. For example, as shown in Table 9, the non-OFDMA preamble puncture mode has 63 types of channel puncture bandwidths in total, and needs to be indicated by six bits, namely, a number range formed by the six bits. Certainly, this is only an example. If the preamble puncture indication mode is increased or decreased, corresponding indication bits can be increased or decreased. This is not limited in this application. The non-OFDMA bandwidth mode is some bandwidth modes in which subchannels remaining after puncturing are used to transmit single user data frames. To avoid over-complexity during implementation, selection is performed on the non-OFDMA bandwidth mode in the standard. Because it is necessary to use filters to deal with the problem of edge signal leakage, a larger quantity of punctured holes indicates a larger quantity of required filters and higher costs. Therefore, when the mode is selected, it is an important factor to control the quantity of punctured holes. For example, only one hole is allowed to be punctured in the 160 MHz bandwidth. The size of the hole can be 20 MHz or 40 MHz. The non-OFDMA bandwidth mode can indicate a specific mode, and requires low indication overheads.

In a case, in the bandwidth indication method provided in the foregoing embodiment of this application, when a total bandwidth indicated by a non-HT frame or a non-HT duplicated frame is less than or equal to 160 MHz, a bandwidth granularity indicated by preamble puncture is 20 MHz. In other words, each number in the number range formed by the six bits for indicating preamble puncture corresponds to a channel state of a 20 MHz subchannel, or each number in the number range formed by the six bits corresponds to a channel state of a 20 MHz subchannel, or each number in the number range formed by the six bits indicates whether a 20 MHz channel corresponding to the number is idle or not.

In another case, in the bandwidth indication method provided in the foregoing embodiment of this application, when a total bandwidth indicated by a non-HT frame or a non-HT duplicated frame is greater than 160 MHz, a bandwidth granularity indicated by preamble puncture is 40 MHz. In other words, each number in the number range formed by the six bits for indicating preamble puncture corresponds to a channel state of a 40 MHz subchannel, or each number in the number range formed by the six bits corresponds to a channel state of a 40 MHz subchannel, or each number in the number range formed by the six bits indicates whether a 40 MHz channel corresponding to the number is idle.

For example, all modes need to correspond to a value in 0 to (2^{^n}-1), where n is a quantity of bits used for the preamble puncture bandwidth indication.

In another implementation, the preamble puncture indication occupies eight bits, and may be referred to as forming a bitmap (bitmap). The preamble puncture indicates preamble puncture information corresponding to the total bandwidth, that is, indicates a channel state of a subchannel in the total bandwidth.

In a case, in the bandwidth indication method provided in the foregoing embodiment of this application, when a total bandwidth indicated by a non-HT frame or a non-HT duplicated frame is less than or equal to 160 MHz, a bandwidth granularity indicated by preamble puncture is 20 MHz. In other words, each of the eight bits for indicating preamble puncture corresponds to a channel state of a 20 MHz subchannel, or each bit in the bitmap corresponds to a channel state of a 20 MHz subchannel, or each bit indicates whether a 20 MHz channel corresponding to the bit is idle.

In another case, in the bandwidth indication method provided in the foregoing embodiment of this application, when a total bandwidth indicated by a non-HT frame or a non-HT duplicated frame is greater than 160 MHz, a bandwidth granularity indicated by preamble puncture is 40 MHz. In other words, each bit in the eight bits for indicating preamble puncture corresponds to a channel state of a 40 MHz subchannel, or each bit in the bitmap corresponds to a channel state of a 40 MHz subchannel, or each bit indicates whether a 40 MHz channel corresponding to the bit is idle.

For example, channels corresponding to bits in the preamble puncture indication are sequentially set in an order from a low frequency to a high frequency. Therefore, in the preamble puncture indication, a least significant bit corresponds to a low-frequency channel, and a most significant bit corresponds to a high-frequency channel.

For example, channels corresponding to bits in the preamble puncture indication are sequentially set in an order from a high frequency to a low frequency. Therefore, in the preamble puncture indication, a least significant bit corresponds to a high-frequency channel, and a most significant bit corresponds to a low-frequency channel.

The foregoing correspondence between a bit and a channel is applicable to the implementation of the preamble puncture indication, and also applicable to another case or another field of the preamble puncture indication.

That one bit indicates whether a channel corresponding to the bit is idle may be as follows: In a possible implementation, when the bit is set to 1, it indicates that the channel corresponding to the bit is idle; or when the bit is set to 0, it indicates that the channel corresponding to the bit is unavailable or busy. In another possible implementation, when the bit is set to 0, it indicates that the channel corresponding to the bit is idle; or when the bit is set to 1, it indicates that the channel corresponding to the bit is unavailable or busy.

In this embodiment of this application, "the channel is unavailable or busy" may be replaced with "the channel is unavailable" or "the channel is punctured". "The channel is idle" may be replaced with "the channel is available" or "the channel is not punctured".

In this embodiment of this application, a plurality of bits in one of the following in the non-HT frame or the non-HT duplicated frame indicate preamble puncture information:
- Multiple bits in Reserved SERVICE Bits.
- One or more bits in Reserved SERVICE Bits and one or more bits in the first seven bits of a scrambler sequence. For example, if an 8-bit bitmap indicates the preamble puncture information, for example, when the third bit in the foregoing embodiment indicates that the channel bandwidth is 320 MHz, the B5 bit and the B6 bit in the first seven bits of the scrambling sequence do not indicate the 320 MHz bandwidth. In this case, the B5 bit and the B6 bit in the first seven bits of the scrambling sequence and six bits in Reserved SERVICE Bits may be used to form the bitmap to indicate the preamble puncture information. Alternatively, in this case, if the third bit and the B6 bit in the first seven bits of the scrambling sequence indicate that the channel bandwidth is greater than 160 MHz, the B5 bit in the first seven bits of the scrambling sequence and seven bits in the Reserved SERVICE Bits may be used to form the bitmap to indicate the preamble puncture information. This is merely an example, and is not limited herein.
- Multiple bits in Frame Control.

The first field is carried in an existing field, so that an existing frame structure design is not changed. In this way, content of the first frame can be correctly parsed by a third-party station other than a target station, and backward compatibility is maintained. A location of a frame occupied by a bit for indicating the preamble puncture information does not overlap a location of a bit for indicating a bandwidth in the foregoing embodiment of this application in a same implementation.

Whether a preamble puncture indication is used in a current sent frame, for example, a non-HT frame or a non-HT duplicated frame. This embodiment of this application provides the following indication manner.

In an indication manner, if a plurality of bits for indicating preamble puncture are not all 0s, or a sum of the plurality of bits is not 0, or at least one of the plurality of bits is not 0, or a value formed by the plurality of bits is not 0, it indicates that the current frame uses the preamble puncture indication. Otherwise, a plurality of bits for indicating preamble puncture are all 0s, or a sum of the plurality of bits is 0, or a value formed by the plurality of bits is 0, it indicates that the current frame does not use the preamble puncture indication.

In an implementation, preamble puncture is indicated in a non-OFDMA preamble puncture indication manner, for example, indicated by using six bits. In this case, it needs to be agreed that in a number range formed by six bits, the all-0 mode cannot indicate any channel puncture mode. In other words, all modes correspond to a number from 1 to (2^{^n}-1), 0 cannot indicate any channel puncture mode, and n is a number of bits for indicating the preamble puncture bandwidth. 0 cannot indicate any channel puncture mode because in this indication manner, the plurality of bits for indicating preamble puncture are all 0s, in other words, it indicates that the current frame does not use the preamble puncture indication.

In another implementation, preamble puncture is indicated in a form of a bitmap, for example, by using an 8-bit bitmap. In this case, it needs to be agreed that when each bit in the bitmap is set to 1, it indicates that a corresponding subchannel is idle, and when each bit is set to 0, it indicates that a corresponding subchannel is unavailable or busy. In this case, the bit cannot be set to 1, and it indicates that a corresponding subchannel is unavailable or busy. If the bit is 0, it indicates that a corresponding subchannel is idle. In this case, if all subchannels of the total bandwidth are idle, the indication form is all 0s. In this indication manner, the plurality of bits for indicating preamble puncture are all 0s, and it indicates that a case in which the current frame does not use the preamble puncture indication cannot be distinguished.

In another indication manner, when being associated with the second device, the first device claims whether the first device supports a capability of performing preamble puncture indication in a non-HT frame or a non-HT duplicated frame. In a possible implementation, the capability indication may be carried in an EHT capability element of an association frame, and is referred to as a preamble puncture capability indication. The association frame includes an association request (association request) frame and an association response (association response) frame. Abit or a field that carries the preamble puncture capability indication, and a frame in which the preamble puncture capability indication is located are not limited herein. All implementations that can implement a same function are included. When the first device is a non-AP station, the capability indication is carried in an association request frame. When the first device is an AP station, the capability indication is carried in an association response frame. A name of the indication bit or the indication field is merely an example, and is not limited in this application. For example, that one bit indicates whether a capability of performing preamble puncture indication is supported may be: In a possible implementation, when the bit is set to 1, it indicates that preamble puncture indication is supported; or when the bit is set to 0, it indicates that preamble puncture indication is not supported. In another possible implementation, when the bit is set to 0, it indicates that preamble puncture indication is supported; or when the bit is set to 1, it indicates that preamble puncture indication is not supported.

In a case, for a first device or a second device that claims to support preamble puncture indication, when a non-HT frame or a non-HT duplicated frame is sent, when a TA is set to bandwidth Signaling TA, the preamble puncture indication needs to be used. On the contrary, in another case, for a first device or a second device that claims not to support the capability, when a non-HT or non-HT duplicated frame is sent, when a TAis set to bandwidth Signaling TA, preamble puncture indication is not used.

In this embodiment of this application, the "preamble puncture indication" is also referred to as "indicating preamble puncture", or a preamble puncture indication mode, or a preamble puncture mode, namely, a preamble puncture mode and/or a non-preamble puncture mode, and indicates a subchannel state of a total bandwidth of a frame.

According to the foregoing specific embodiment, the information indication method provided in this application includes the following steps.

In an indication manner, the information indication method includes: A first device generates a first frame, where the first frame is a non-high throughput non-HT frame or a non-high throughput duplicated non-HT duplicated frame, the first frame includes a first field, and if at least one bit in bits of the first field is not 0, it indicates that the first field indicates a preamble puncture mode; and
a second device receives the first frame sent by the first device, where if at least one bit in bits of the first field is not 0, the second device determines that the first field indicates the preamble puncture mode.

In this indication method, the first field is the bitmap (bitmap) formed by the plurality of bits described in the foregoing embodiment or the plurality of bits indicated in the non-OFDMA mode. In this indication method, the schematic flowchart of the bandwidth indication method 400 provided in FIG. 4 may be used. Steps of the indication method are described in the indication method 400, and details are not described herein again.

In another indication method, the information indication method includes:
a first device generates a first frame, where the first frame is a non-high throughput non-HT frame or a non-high throughput duplicated non-HT duplicated frame, and the first frame includes a first field;
the first device generates a second frame, where the second frame includes a first indication, the second frame includes an association request frame or an association response frame, and the first indication indicates whether the first field indicates the preamble puncture mode;
the first device sends the first frame and the second frame, where a sending time of the second frame is earlier than a sending time of the first frame;
a second device receives the first frame and the second frame that are sent by the first device, where the first frame is the non-high throughput non-HT frame or the non-high throughput duplicated non-HT duplicated frame, the first frame includes the first field, the second frame includes the first indication, and the second frame includes the association request frame or the association response frame; and
the second device determines, based on the first indication, whether the first field indicates the preamble puncture mode.

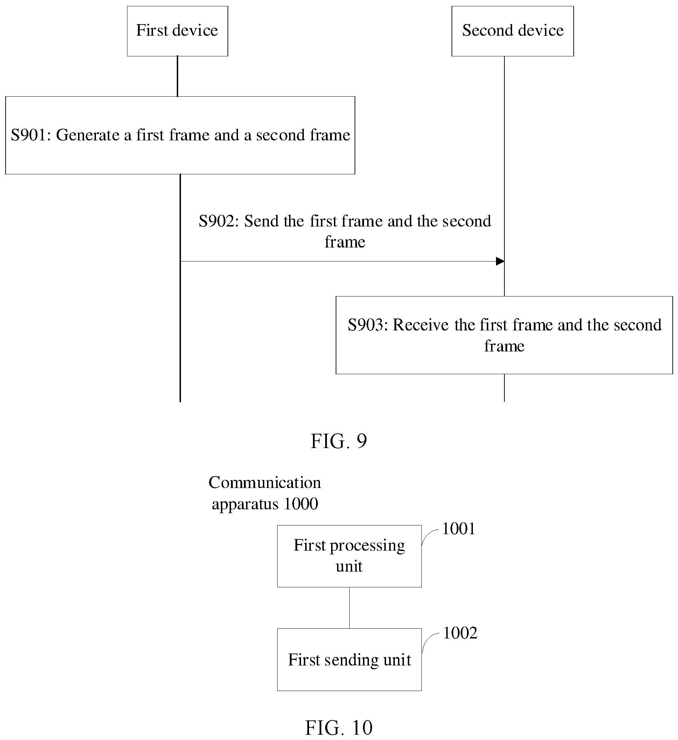

In this indication method, the first field is the bitmap (bitmap) formed by the plurality of bits described in the foregoing embodiment or the plurality of bits indicated in the non-OFDMA mode. The first indication is carried in the second frame, and indicates whether the first field has a capability of indicating the preamble puncture mode. The foregoing embodiment provides specific descriptions, and the indication may be carried in an EHT capability element of an association request/response frame. Therefore, in this indication method, the schematic flowchart of the bandwidth indication method 700 provided in FIG. 9 may be used. The bandwidth indication method 700 includes, but is not limited to, the following steps:

S701: A first device generates a first frame and a second frame.

S702: The first device sends the first frame and the second frame to a second device.

S703: The second device receives the first frame and the second frame.

For ease of description, clarity, and brevity, the first device and the second device in the foregoing indication method are not distinguished for ease of description, but may alternatively be a third device and a fourth device, a fifth device and a sixth device, or the like. In the same indication method, the first frame, the first field, and the like are not distinguished for a same reason. This is not limited herein. In different indication methods, a same name may represent different meanings and specific implementation methods. Different indication methods may have different implementations, and for ease of use, the same description is still provided herein.

This application further provides a bandwidth granularity indication method. A schematic flowchart of the bandwidth granularity indication method is shown in FIG. 4 in the foregoing embodiment. Steps of the indication method are described in the foregoing indication method 400, and details are not described herein again. The bandwidth granularity indication method includes the following steps:
a first device generates a first frame, where the first frame is a non-high throughput non-HT frame or a non-high throughput duplicated non-HT duplicated frame, the first frame includes a first bit, a second bit, and a fourth bit, and the first bit and the second bit are bits in a scrambling sequence of the first frame; and
if a first bandwidth granularity of the first frame is indicated, the fourth bit is a first value, the first bandwidth granularity is 20 MHz and corresponds to a first channel bandwidth, the first bit and the second bit indicate the first channel bandwidth, and the first channel bandwidth is one of 20 MHz, 40 MHz, 80 MHz, or 160 MHz; or
if a second bandwidth granularity of the first frame is indicated, the fourth bit is a second value, the second bandwidth granularity is 40 MHz and corresponds to a second channel bandwidth, and the second channel bandwidth is a bandwidth greater than 160 MHz;
the first device sends the first frame to a second device; and
the second device receives the first frame sent by the first device, where if the fourth bit is a first value, the second device determines that a bandwidth granularity of the first frame is a first bandwidth granularity, the first bandwidth granularity is 20 MHz and corresponds to a first channel bandwidth, the first device determines, based on the first bit and the second bit, that a bandwidth of the first frame is the first channel bandwidth, and the first channel bandwidth is one of 20 MHz, 40 MHz, 80 MHz, or 160 MHz; or
if the fourth bit is a second value, the second device determines that a bandwidth granularity of the first frame is a second bandwidth granularity, the second bandwidth granularity is 40 MHz and corresponds to a second channel bandwidth, and the second channel bandwidth is a bandwidth greater than 160 MHz.

Specifically, the bandwidth granularity described herein is a bandwidth granularity of a preamble puncture mode, or a bandwidth granularity of a preamble puncture mode. The first bit and the second bit are a B5 bit and a B6 bit in the first seven bits of the scrambling sequence. Using B5B6 for bandwidth indication is applicable to a bandwidth indication supporting device of previous generations of standard versions, has high compatibility, and is convenient to operate in practice. The second channel bandwidth is 320 MHz. 160 MHz in the first channel bandwidth includes continuous 160 MHz, or non-continuous 80+80 MHz.

The first frame further includes a first field. The first field indicates the preamble puncture mode. For details about how to indicate the preamble puncture mode, whether the preamble puncture indication is used in the current sent frame, and which indication manner is used, refer to the foregoing embodiments. Details are not described herein again.

The fourth bit may be any one of the following:
any one of a B0 bit, a B 1 bit, a B2 bit, and a B3 bit in the first seven bits of the scrambling sequence, one bit in reserved service bits (Reserved SERVICE Bits), one bit in a receiver address RA field, or one bit in a Frame Control field. When the fourth bit is any one of B0 to B3 in the first seven bits of the scrambling sequence, no additional signaling indication is required outside the scrambling sequence, so that signaling overheads can be reduced. When the third bit is a bit of another field, bit overheads of the scrambling sequence are not increased. This can improve randomness of the scrambling sequence, reduce a peak-to-average power ratio in data transmission, and improve communication system performance.

That at least one of the first bit and the second bit does not indicate the second channel bandwidth includes:
For example, values of the first bit and the second bit are random values. Only one bit may be used to indicate the channel bandwidth. This can save indication bits in the scrambling sequence, improve randomness of the scrambling sequence, reduce a peak-to-average power ratio in data transmission, and improve communication system performance. In addition, the saved indication bits may be reserved for another purpose.

For example, the first bit indicates the second channel bandwidth or a reserved bandwidth, and the second bit is a random value. For example, the first bit is a third value and indicates the second channel bandwidth, the first bit is a fourth value and indicates the reserved bandwidth, and the second bit is the random value. Alternatively, the second bit indicates the second channel bandwidth or a reserved bandwidth, and the first bit is a random value. For example, the second bit is the third value and indicates the second channel bandwidth, the second bit is the fourth value and indicates the reserved bandwidth, and the first bit is the random value.

This can save indication bits for indicating the channel bandwidth including the indication bits in the scrambling sequence, improve randomness of the scrambling sequence, reduce a peak-to-average power ratio in data transmission, and improve communication system performance. In addition, the saved indication bits may be reserved for another purpose. Similarly, a reserved bandwidth state is further reserved, and may be used to indicate a new bandwidth, or may be used for another purpose.

In this application, setting of the value of the bit indicating the channel bandwidth is merely an example for description. In an actual case, the value is set to 1 or 0, and corresponding replacement is not limited in this application.

For ease of description, clarity, and brevity, the first device and the second device in this embodiment are not distinguished for ease of description and the foregoing embodiments, but may alternatively be a third device and a fourth device, a fifth device and a sixth device, or the like. In the same indication method, same names such as the first frame, the first bit, the second bit, and the first channel bandwidth are not distinguished. This is not limited herein, and may represent different meanings and specific implementation methods. There may be different implementations in different embodiments.

Whether a preamble puncture indication is used in a current sent frame, for example, a non-HT frame or a non-HT duplicated frame. An indication manner in this embodiment of this application is described in the foregoing embodiment of this application, and details are not described herein again.

The fourth bit indicates the bandwidth granularity of the preamble puncture mode, and the bandwidth granularity includes 20 MHz and 40 MHz. When a total bandwidth indicated by the non-HT frame or the non-HT duplicated frame is less than or equal to 160 MHz, the fourth bit is set to the first value, indicating that the bandwidth granularity is 20 MHz. Alternatively, when a total bandwidth indicated by the non-HT frame or the non-HT duplicated frame is greater than 160 MHz, the fourth bit is set to the second value, indicating that the bandwidth granularity is 40 MHz.

The preamble puncture indication method is described in the foregoing embodiment, and details are not described herein again.

The fourth bit indicates the bandwidth granularity of the preamble puncture mode. In addition, distinguishing of the bandwidth granularity also implies total bandwidth information. Therefore, channel bandwidth information may be obtained at the same time. In this embodiment, the bandwidth granularity of the preamble puncture mode of the frame is indicated, and a channel bandwidth is indicated by distinguishing bandwidth granularities, thereby reducing consumption of indication signaling and simplifying a design. Specifically, when the fourth bit is set to the first value and indicates that the bandwidth granularity of the preamble puncture mode is 20 MHz, a total bandwidth corresponding to the puncture mode is a bandwidth less than or equal to 160 MHz, that is, may indicate that the channel bandwidth is a channel bandwidth less than or equal to 160 MHz. When the fourth bit is set to the second value and indicates that the bandwidth granularity of the preamble puncture mode is 40 MHz, a total bandwidth corresponding to the puncture mode is a bandwidth greater than 160 MHz, that is, may indicate that the channel bandwidth is a channel bandwidth greater than 160 MHz. Therefore, the fourth bit can indicate the bandwidth granularity of the preamble punching mode, and the bandwidth of the sent frame can be obtained at the same time.

In this embodiment of this application, that the bandwidth Signaling TA indicates whether the first seven bits of the scrambling sequence of the sent frame carry the bandwidth information is consistent with that in the foregoing embodiment. Details are not described herein again.

For example, in addition to the four types of bandwidths: a 20 MHz bandwidth, a 40 MHz bandwidth, an 80 MHz bandwidth, and a 160 (80+80) MHz bandwidth, a currently occurring bandwidth further includes new bandwidths such as a 240 MHz bandwidth and a 320 MHz bandwidth. In this embodiment, the fourth bit may be used to determine the bandwidth granularity, and the B5 bit and the B6 bit in the first seven bits of the scrambling sequence may be used to indicate a channel bandwidth. For any bandwidth such as a 20 MHz bandwidth, a 40 MHz bandwidth, an 80 MHz bandwidth, a 160 (80+80) MHz bandwidth, or a 320 MHz bandwidth, specifically, in this case, the bandwidth granularity is 20 MHz, the fourth bit is set to the first value, and the B5 bit and the B6 bit in the first seven bits of the scrambling sequence may indicate the 20 MHz bandwidth, the 40 MHz bandwidth, the 80 MHz bandwidth, and the 160 (80+80) MHz bandwidth of a channel. Alternatively, for a 320 MHz bandwidth, in this case, the bandwidth granularity is 40 MHz, the fourth bit is set to the second value, and the channel bandwidth is 320 MHz. In this case, the B5 bit and the B6 bit in the first seven bits of the scrambling sequence are random values. Alternatively, for a 320 MHz bandwidth, in this case, the bandwidth granularity is 40 MHz, the fourth bit is set to the second value, and any one of the B5 bit and the B6 bit in the first seven bits of the scrambling sequence is used to indicate the 320 MHz bandwidth of a channel. In this case, the other one, of the B5 bit and the B6 bit, that does not indicate the bandwidth in the first seven bits of the scrambling sequence is a random value.

For example, the device type may be an extremely high throughput (Extremely High Throughput, EHT) station, or the device type may be a very high throughput (Very High Throughput, VHT) station or a high efficiency (High efficiency, HE) station that does not support an EHT. In this embodiment of this application, station types of the first device and the second device do not need to be determined, and a bandwidth indication manner may be determined by using the fourth bit for indication.

In an implementation, as shown in Table 10, an example in which the fourth bit is the B3 bit in the first seven bits of the scrambling sequence is used to describe a bandwidth granularity indication method. In practice, the fourth bit may alternatively be one bit in B0 to B2, or one bit in any one of reserved service bits (Reserved SERVICE Bits), a receiver address RA field, and a Frame Control field. In other words, when the B3 bit (the fourth bit) in the first seven bits of the scrambling sequence indicates that the bandwidth granularity of the preamble puncture mode is 20 MHz, the B3 bit in the first seven bits of the scrambling sequence and the B5 bit and the B6 bit in the first seven bits of the scrambling sequence indicate the 20 MHz bandwidth, the 40 MHz bandwidth, the 80 MHz bandwidth, and the 160 (80+80) MHz bandwidth of the channel. Alternatively, when the B3 bit in the first seven bits of the scrambling sequence indicates that the bandwidth granularity of the preamble puncture mode is 40 MHz, the channel bandwidth is a 320 MHz bandwidth. Herein, 320 MHz is used as an example. Another bandwidth such as 240 MHz may alternatively be used.

**Table 10**

| Bandwidth granularity | Bandwidth | B3 | B5B6 |
|---|---|---|---|
| 20 MHz | CBW20 | 0 | 0 |
| 20 MHz | CBW40 | 0 | 1 |
| 20 MHz | CBW80 | 0 | 2 |
| 20 MHz | CBW160 or CBW80+80 | 0 | 3 |
| 40 MHz | CBW320 | 1 | Random value |

As shown in Table 10, when B3 is set to 0, it indicates that the bandwidth granularity of the preamble puncture mode is 20 MHz. When B5B6 is 0-3, 20 MHz, 40 MHz, 80 MHz, and 160 (80+80) MHz are respectively indicated, where B5 is a least significant bit, and B6 is a most significant bit. Specifically, when B3 = 0, B5 = 0, and B6 = 0, 20 MHz is indicated; when B3 = 0, B5 = 1, and B6 = 0, 40 MHz is indicated; when B3 = 0, B5 = 0, and B6 = 1, 80 MHz is indicated; or when B3 = 0, B5 = 1, and B6 = 1, 160 MHz or 80+80 MHz is indicated. When B3 is set to 1, it indicates that the bandwidth granularity of the preamble puncture mode is 40 MHz, it also indicates that a bandwidth of a current frame is 320 MHz. In this case, B5B6 does not indicate bandwidth information, and may be set to a random value.

According to the bandwidth granularity indication method provided in this embodiment of this application, only one bit may be used to indicate the bandwidth granularity of the preamble puncture mode, and the channel bandwidth of the sent frame may be determined based on the bandwidth granularity, so that signaling overheads can be reduced. When the bandwidth granularity is 40 MHz, that is, when the 320 MHz bandwidth is indicated, two indication bits can be saved as random values. This can improve randomness of the scrambling sequence, and reduce a PAPR in data transmission. In addition, the two saved indication bits may be reserved for another purpose.

In another implementation, as shown in Table 11, an example in which the fourth bit indicates the bandwidth granularity, and any one of the B5 bit and the B6 bit in the first seven bits of the scrambling sequence indicates the 320 MHz bandwidth of the channel is used to describe an indication method for indicating the bandwidth granularity and determining the channel bandwidth. For example, the fourth bit is the B3 bit in the first seven bits of the scrambling sequence, and any one of the B5 bit and the B6 bit in the first seven bits of the scrambling sequence is B6. B3 may alternatively be one bit in B0 to B2 in the first seven bits of the scrambling sequence, or one bit in any one of reserved service bits (Reserved SERVICE Bits), a receiver address RA field, and a Frame Control field. B6 may alternatively be B5. In other words, when the B3 bit (the fourth bit) in the first seven bits of the scrambling sequence indicates that the bandwidth granularity of the preamble puncture mode is 20 MHz, the B3 bit in the first seven bits of the scrambling sequence and the B5 bit and the B6 bit in the first seven bits of the scrambling sequence indicate the 20 MHz bandwidth, the 40 MHz bandwidth, the 80 MHz bandwidth, and the 160 (80+80) MHz bandwidth of the channel. Alternatively, when the B3 bit in the first seven bits of the scrambling sequence indicates that the bandwidth granularity of the preamble puncture mode is 40 MHz, a value of the B6 bit in the first seven bits of the scrambling sequence indicates the 320 MHz bandwidth of the channel. Herein, 320 MHz is used as an example. Another bandwidth such as 240 MHz may alternatively be used.

**Table 11**

| Bandwidth granularity | Bandwidth | B3 | B6 | B5 |
|---|---|---|---|---|
| 20 MHz | CBW20 | 0 | 0 | 0 |
| 20 MHz | CBW40 | 0 | 0 | 1 |
| 20 MHz | CBW80 | 0 | 1 | 0 |
| 20 MHz | CBW160 or CBW80+80 | 0 | 1 | 1 |
| 40 MHz | CBW320 | 1 | 0 | Random value |
| 40 MHz | Reserved | 1 | 1 | Random value |

As shown in Table 11, when B3 is set to 0, it indicates that the bandwidth granularity of the preamble puncture mode is 20 MHz. When B5B6 is 0-3, 20 MHz, 40 MHz, 80 MHz, and 160 (80+80) MHz are respectively indicated, where B5 is a least significant bit, and B6 is a most significant bit. Specifically, when B3 = 0, B5 = 0, and B6 = 0, 20 MHz is indicated; when B3 = 0, B5 = 1, and B6 = 0, 40 MHz is indicated; when B3 = 0, B5 = 0, and B6 = 1, 80 MHz is indicated; or when B3 = 0, B5 = 1, and B6 = 1, 160 MHz or 80+80 MHz is indicated. When B3 is set to 1, it indicates that the bandwidth granularity of the preamble puncture mode is 40 MHz. In this case, when B6 is set to 0, it indicates that the bandwidth of the current frame is 320 MHz. In this case, B5 does not indicate the bandwidth information, and may be set to a random value. When B6 is set to 1, it indicates that the bandwidth of the current frame is a reserved value. For example, the bandwidth is 240 MHz, or may be used for another purpose. In this case, B5 does not indicate the bandwidth information, and may be set to a random value.

According to the bandwidth granularity indication method provided in this embodiment of this application, one bit may be used to indicate a bandwidth granularity of a preamble puncture mode. In addition, when one bit may be added to indicate a 320 MHz bandwidth of a channel, one indication bit can be saved as a random value. This can improve randomness of the scrambling sequence, and reduce a PAPR in data transmission. In addition, the saved indication bit may be reserved for another purpose. Similarly, in this indication manner, a reserved bandwidth state is further reserved, and may be used to indicate a new bandwidth, or may indicate a bandwidth granularity greater than 40 MHz, or may be used for another purpose.

The first device generates a non-HT frame or a non-HT duplicated frame according to the bandwidth indication method provided in this embodiment of this application, and sends the non-HT frame or the non-HT duplicated frame to the second device, and the second device receives the non-HT frame or the non-HT duplicated frame.

In an implementation, when the fourth bit indicates the bandwidth granularity of preamble puncture, and the fourth bit can indicate the 320 MHz bandwidth of the channel, when the fourth bit is the first value, the bandwidth granularity of the preamble puncture mode of the indication frame is 20 MHz. In addition, values of the B5 bit and the B6 bit in the first seven bits of the scrambling sequence are used to determine which one of 20 MHz, 40 MHz, 80 MHz, and 160 (80+80) MHz is the channel bandwidth. When the fourth bit is the second value, it indicates that the bandwidth granularity of the preamble puncture mode of the frame is 40 MHz, and the channel bandwidth is 320 MHz.

In another implementation, when the fourth bit indicates the bandwidth granularity of preamble puncture, and the 320 MHz bandwidth of the channel can be indicated by using the fourth bit and any one of the B5 bit and the B6 bit in the first seven bits of the scrambling sequence, when the fourth bit is the first value, it indicates that the bandwidth granularity of the preamble puncture mode of the frame is 20 MHz, and values of the B5 bit and the B6 bit in the first seven bits of the scrambling sequence are used to determine which one of 20 MHz, 40 MHz, 80 MHz, and 160 (80+80) MHz is the channel bandwidth. When the fourth bit is the second value, the bandwidth granularity of the preamble puncture mode of the frame is 40 MHz. If any one of the B5 bit and the B6 bit in the first seven bits of the scrambling sequence is the third value, it indicates that the bandwidth of the current frame is 320 MHz. If any one of the B5 bit and the B6 bit in the first seven bits of the scrambling sequence is the fourth value, it indicates that the bandwidth of the current frame is a reserved value. For example, the bandwidth is 240 MHz, or is used for another purpose. In this case, the other one of the B5 bit and the B6 bit in the first seven bits of the scrambling sequence no longer indicates the bandwidth information, and may be set to a random value.

For example, the random value in this application may be any value, a reserved value, or a default value.

For ease of description, clarity, and brevity, same method procedures and steps in the foregoing embodiments are described and summarized by using a same diagram. However, for different embodiments, specific implementation methods are different, and different embodiments are distinguished by referring to the descriptions in the foregoing embodiments, which is not limited herein. Similarly, for ease of description, the first device and the second device in different embodiments are not distinguished, but may alternatively be a third device and a fourth device, a fifth device and a sixth device, or the like. In different embodiments, the first frame, the first bit, the second bit, the third bit, and the like are not distinguished for a same reason. This is not limited herein. In different indication methods, a same name may represent different meanings and specific implementation methods. Different indication methods may have different implementations. For ease of description, clarity, and brevity in this application, names are not distinguished in different embodiments, and specific meanings are determined based on different embodiments. This is not limited herein.

For example, the station of the first device and the station of the second device in this embodiment of this application may be an access point (access point, AP) or a non-access point (non-AP). Sometimes, the non-access point is also referred to as a station (station, STA). The station in this application includes the two types. When the first device communicates with the second device, the following case exists: The first device is an AP, and the second device is a non-AP. The first device is a non-AP, and the second device is an AP. The first device is a non-AP, and the second device is a non-AP. The first device is an AP, and the second device is an AP.

In this embodiment of this application, both the non-HT frame and the non-HT duplicated frame may be a request to send (Request To Send, RTS) frame, a clear to send (Clear To Send, CTS) frame, or the like.

In this application, the station that supports a bandwidth greater than 160 MHz includes an extremely high throughput EHT station that supports the 802. 1 The standard, a station in another name of the 802. 1 The standard, and a station in a next-generation standard. Therefore, the name of the station in this application is not limited by the standard or other manner, including the implementation of the same function.

The following mainly describes the solutions provided in embodiments of this application from a perspective of a communication apparatus. It may be understood that, to implement the foregoing functions, the communication apparatus includes a corresponding hardware structure and/or software module for performing each function. A person of ordinary skill in the art should easily be aware that, in combination with the example modules and algorithm steps described in embodiments disclosed in this specification, this application may be implemented by hardware or a combination of hardware and computer software. Whether a function is performed by hardware or hardware driven by computer software depends on particular applications and design constraints of the technical solution. A person skilled in the art may use different methods to implement the described functions for each particular application, but it should not be considered that the implementation goes beyond the scope of this application.

As shown in FIG. 10, an embodiment of this application provides a communication apparatus 1000. The apparatus 1000 may be the first device or a part of the first device in the foregoing embodiments or FIG. 4, FIG. 5, or FIG. 9, and is configured to implement the first device (a sending device). In the performed method, the apparatus includes a first processing unit 1001 and a first sending unit 1002.

For different method embodiments, the first processing unit 1001 and the first sending unit 1002 may perform different functions. For example, in an embodiment:
The first processing unit 1001 is configured to generate a first frame, where the first frame is a non-high throughput non-HT frame or a non-high throughput duplicated non-HT duplicated frame, the first frame includes a first bit, a second bit, and a third bit, and the first bit and the second bit are bits in a scrambling sequence of the first frame.

If a first channel bandwidth of the first frame is indicated, the third bit is a first value, and the first bit and the second bit indicate that the first channel bandwidth is one of 20 MHz, 40 MHz, 80 MHz, or 160 MHz; or
if a second channel bandwidth of the first frame is indicated, the third bit is a second value and indicates the second channel bandwidth, at least one of the first bit and the second bit does not indicate the second channel bandwidth, and the second channel bandwidth is a bandwidth greater than 160 MHz.

The first sending unit 1002 is configured to send the first frame to a second device.

### In another embodiment:

The first processing unit 1001 is configured to generate a first frame, where the first frame is a non-high throughput non-HT frame or a non-high throughput duplicated non-HT duplicated frame, the first frame includes a first bit, a second bit, and a third bit, the first bit and the second bit are bits in a scrambling sequence of the first frame, and the first device is a station that supports a bandwidth greater than 160 MHz.

The first sending unit 1002 is configured to send the first frame to a second device.

If the second device is a station that supports only a bandwidth less than or equal to 160 MHz, the first bit and the second bit indicate a first channel bandwidth, the first channel bandwidth is one of 20 MHz, 40 MHz, 80 MHz, or 160 MHz, and the third bit does not indicate the first channel bandwidth; or
if the second device is a station that supports a bandwidth greater than 160 MHz, when the first channel bandwidth of the first frame is indicated, the third bit is a first value, and the first bit and the second bit indicate that the first channel bandwidth is one of 20 MHz, 40 MHz, 80 MHz, and 80+80 MHz or 160 MHz; or when the second channel bandwidth of the first frame is indicated, the third bit is a second value and indicates the second channel bandwidth, at least one of the first bit and the second bit does not indicate the second channel bandwidth, and the second channel bandwidth is a bandwidth greater than 160 MHz.

### In still another embodiment:

The first processing unit 1001 is configured to generate a first frame, where the first frame is a non-high throughput non-HT frame or a non-high throughput duplicated non-HT duplicated frame, the first frame includes a first field, and if at least one bit in bits of the first field is not 0, it indicates that the first field indicates a preamble puncture mode.

The first sending unit 1002 is configured to send the first frame to a second device.

### In still another embodiment:

The first processing unit 1001 is configured to generate a first frame, where the first frame is a non-high throughput non-HT frame or a non-high throughput duplicated non-HT duplicated frame, and the first frame includes a first field; and
configured to generate a second frame, where the second frame includes a first indication, the second frame includes an association request frame or an association response frame, and the first indication indicates whether the first field indicates a preamble puncture mode.

The first sending unit 1002 is configured to send the first frame and the second frame to a second device.

### In still another embodiment:

The first processing unit 1001 is configured to generate a first frame, where the first frame is a non-high throughput non-HT frame or a non-high throughput duplicated non-HT duplicated frame, the first frame includes a first bit, a second bit, and a fourth bit, and the first bit and the second bit are bits in a scrambling sequence of the first frame.

If a first bandwidth granularity of the first frame is indicated, the fourth bit is a first value, the first bandwidth granularity is 20 MHz and corresponds to a first channel bandwidth, the first bit and the second bit indicate the first channel bandwidth, and the first channel bandwidth is one of 20 MHz, 40 MHz, 80 MHz, or 160 MHz; or
if a second bandwidth granularity of the first frame is indicated, the fourth bit is a second value, the second bandwidth granularity is 40 MHz and corresponds to a second channel bandwidth, and the second channel bandwidth is a bandwidth greater than 160 MHz.

The first sending unit 1002 is configured to send the first frame to a second device.

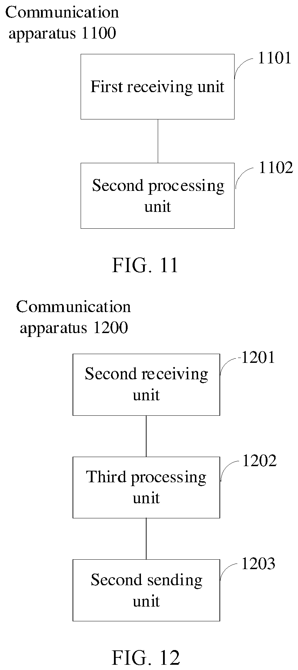

As shown in FIG. 11, an embodiment of this application provides a communication apparatus 1100. The apparatus 1100 may be the second device or a part of the second device in the foregoing embodiments or FIG. 4, FIG. 5, or FIG. 9, and is configured to implement the second device (a receiving device). In the performed method, the apparatus includes a first receiving unit 1101 and a second processing unit 1102.

For different method embodiments, the first receiving unit 1101 and the second processing unit 1102 may perform different functions. For example, in an embodiment:
The first receiving unit 1101 is configured to receive a first frame sent by a first device, where the first frame is a non-high throughput non-HT frame or a non-high throughput duplicated non-HT duplicated frame, the first frame includes a first bit, a second bit, and a third bit, and the first bit and the second bit are bits in a scrambling sequence of the first frame.

The second processing unit 1102 is configured to determine a channel bandwidth of the first frame based on the first frame.

If the third bit is a first value, the second device determines, based on the first bit and the second bit, that a bandwidth of the first frame is a first channel bandwidth, and the first channel bandwidth is one of 20 MHz, 40 MHz, 80 MHz, or 160 MHz; or
if the third bit is a second value, the second device determines, based on the third bit, that a channel bandwidth of the first frame is a second channel bandwidth, at least one of the first bit and the second bit does not indicate the second channel bandwidth, and the second channel bandwidth is a bandwidth greater than 160 MHz.

### In another embodiment:

The first receiving unit 1101 is configured to receive a first frame sent by a first device, where the first frame is a non-high throughput non-HT frame or a non-high throughput duplicated non-HT duplicated frame, the first frame includes a first bit, a second bit, and a third bit, the first bit and the second bit are bits in a scrambling sequence of the first frame, and the first device is a station that supports a bandwidth greater than 160 MHz.

The second processing unit 1102 is configured to determine a channel bandwidth based on the first frame.

If the second device is a station that supports only a bandwidth less than or equal to 160 MHz, the second device determines, based on the first bit and the second bit, that a bandwidth of the first frame is a first channel bandwidth, the first channel bandwidth is one of 20 MHz, 40 MHz, 80 MHz, or 160 MHz, and the third bit does not indicate the first channel bandwidth; or
if the second device is a station that supports a bandwidth greater than 160 MHz, when the third bit is a first value, the second device determines, based on the first bit and the second bit, that a bandwidth of the first frame is a first channel bandwidth, and the first channel bandwidth is one of 20 MHz, 40 MHz, 80 MHz, and 80+80 MHz or 160 MHz; or when the third bit is a second value, the second device determines, based on the third bit, that a bandwidth of the first frame is a second channel bandwidth, at least one of the first bit and the second bit does not indicate the second channel bandwidth, and the second channel bandwidth is a bandwidth greater than 160 MHz.

### In still another embodiment:

The first receiving unit 1101 is configured to receive a first frame sent by a first device, where the first frame is a non-high throughput non-HT frame or a non-high throughput duplicated non-HT duplicated frame, and the first frame includes a first field.

The second processing unit 1102 is configured to: if at least one bit in bits of the first field is not 0, determine that the first field indicates a preamble puncture mode.

### In still another embodiment:

The first receiving unit 1101 is configured to receive a first frame and a second frame that are sent by a first device, where the first frame is a non-high throughput non-HT frame or a non-high throughput duplicated non-HT duplicated frame, the first frame includes a first field, the second frame includes a first indication, and the second frame includes an association request frame or an association response frame.

The second processing unit 1102 is configured to determine, based on the first indication, whether the first field indicates a preamble puncture mode.

### In still another embodiment:

The first receiving unit 1101 is configured to receive a first frame sent by a first device, where the first frame is a non-high throughput non-HT frame or a non-high throughput duplicated non-HT duplicated frame, the first frame includes a first bit, a second bit, and a fourth bit, and the first bit and the second bit are bits in a scrambling sequence of the first frame.

The second processing unit 1102 is configured to determine a bandwidth granularity of a channel based on the first frame.

If the fourth bit is a first value, the second device determines that a bandwidth granularity of the first frame is a first bandwidth granularity, the first bandwidth granularity is 20 MHz and corresponds to a first channel bandwidth, the first device determines, based on the first bit and the second bit, that a bandwidth of the first frame is the first channel bandwidth, and the first channel bandwidth is one of 20 MHz, 40 MHz, 80 MHz, or 160 MHz; or
if the fourth bit is a second value, the second device determines that a bandwidth granularity of the first frame is a second bandwidth granularity, the second bandwidth granularity is 40 MHz and corresponds to a second channel bandwidth, and the second channel bandwidth is a bandwidth greater than 160 MHz.

The first device and the second device described above are respectively written from a transmit end and a receive end, and correspond to the sending device and the receiving device. However, a device may play a role of a transmit end to implement the method mentioned in embodiments of this application, or may play a role of a receive end to implement the method mentioned in embodiments of this application. Therefore, the communication apparatus 1200 has units (a processing unit and a sending unit) included in the first device, and also has units (a receiving unit and a processing unit) included in the second device. When functions of the two devices are integrated, the two processing units may be integrated. For example, as shown in FIG. 12, an embodiment of this application provides a communication apparatus 1200. The apparatus includes a second receiving unit 1201, a third processing unit 1202, and a second sending unit 1203. The apparatus 1200 may be the first device or a part of the first device in the foregoing embodiments or FIG. 4, FIG. 5, or FIG. 9, and is configured to implement the first device (a sending device). For the performed method, refer to the embodiments described in FIG. 10. The apparatus 1200 may be the second device or a part of the second device in the foregoing embodiments or FIG. 4, FIG. 5, or FIG. 9, and is configured to implement the second device (a receiving device). For the performed method, refer to the embodiments described in FIG. 11.

For different method embodiments, the second receiving unit 1201 and the third processing unit 1202 may perform different functions. Similarly, for different method embodiments, the second sending unit 1203 and the third processing unit 1202 may perform different functions. For example, the communication apparatus 1200 communicates with STA1 and STA2 that are different. When communicating with STA1, the communication apparatus 1200 may perform the method performed by the first device (the sending device). When communicating with STA2, the communication apparatus 1200 may perform the method performed by the second device (the receiving device). For another example, the communication apparatus 1200 communicates with AP1 and AP2 that are different. When communicating with AP1, the communication apparatus 1200 may perform the method performed by the first device (the sending device). When communicating with AP2, the communication apparatus 1200 may perform the method performed by the second device (the receiving device).

This application provides a communication system. The communication system includes a first device and a second device. The first device is the communication apparatus 1000 described in FIG. 10 or the communication apparatus 1200 described in FIG. 12. For the performed method, refer to the embodiments described in FIG. 10 or FIG. 12. The second device is the communication apparatus 1100 described in FIG. 11 or the communication apparatus 1200 described in FIG. 12. For the performed method, refer to the embodiments described in FIG. 11 or FIG. 12. Details are not described herein again.

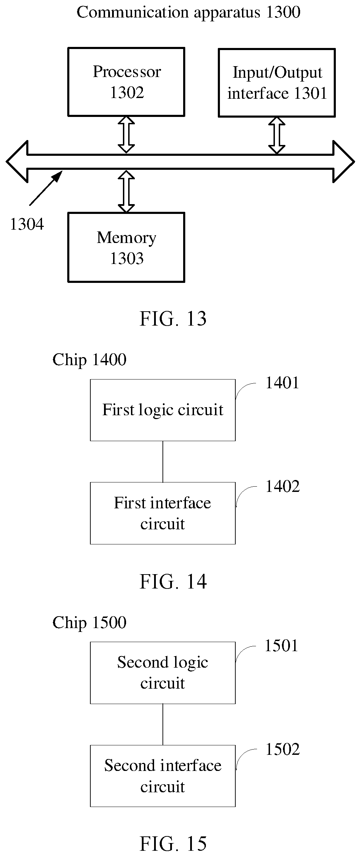

FIG. 13 is a schematic diagram of a communication apparatus 1300 according to an embodiment of this application. The apparatus 1300 may be an application-specific integrated circuit, one or more FPGAs (field programmable gate array), a PLD (programmable logic device), a controller, a state machine, gate logic, a discrete hardware component, any other suitable circuit, any combination of circuits that can perform various functions described in this application, a chip, a board, a communication device, or the like. The apparatus 1300 is configured in the apparatus of the first device or the second device in the foregoing embodiments or FIG. 4, FIG. 5, or FIG. 9, and may be configured to perform operations performed in the foregoing embodiments. As shown in FIG. 13, the apparatus 1300 includes an input/output interface 1301, a processor 1302, and a memory 1303. The input/output interface 1301, the processor 1302, and the memory 1303 may be connected through a bus system 1304.

The memory 1303 is configured to store a program, instructions, or code. The processor 1302 is configured to execute the program, the instructions, or the code in the memory 1303, to control the input/output interface 1301 to receive or send a signal and implement the steps and the functions implemented by the first device or the second device in the implementations corresponding to the foregoing embodiments. Details are not described herein again. For specific implementations of the input/output interface 1301 and the processor 1302, refer to specific descriptions of the first device or the second device in the foregoing embodiments or FIG. 4, FIG. 5, or FIG. 9. Details are not described herein again.

FIG. 14 is a schematic diagram of a chip 1400 according to an embodiment of this application. The chip 1400 includes a first logic circuit 1401 and a first interface circuit 1402. The first logic circuit 1401 is configured to perform generation steps in the method according to any one of the possible implementations of the first aspect, the fifth aspect, the ninth aspect, the tenth aspect, or the seventeenth aspect. The first interface circuit 1402 is configured to perform a sending or receiving action in the method according to any one of the possible implementations of the first aspect, the fifth aspect, the ninth aspect, the tenth aspect, or the seventeenth aspect. In this case, "sending" is equivalent to "output", and "receiving" is equivalent to "input".

For different method embodiments, the first logic circuit 1401 and the first interface circuit 1402 may perform different functions. For example, in an embodiment:
The first logic circuit 1401 is configured to generate a first frame, where the first frame is a non-high throughput non-HT frame or a non-high throughput duplicated non-HT duplicated frame, the first frame includes a first bit, a second bit, and a third bit, and the first bit and the second bit are bits in a scrambling sequence of the first frame.

If a first channel bandwidth of the first frame is indicated, the third bit is a first value, and the first bit and the second bit indicate that the first channel bandwidth is one of 20 MHz, 40 MHz, 80 MHz, or 160 MHz; or
if a second channel bandwidth of the first frame is indicated, the third bit is a second value and indicates the second channel bandwidth, at least one of the first bit and the second bit does not indicate the second channel bandwidth, and the second channel bandwidth is a bandwidth greater than 160 MHz.

The first interface circuit 1402 is configured to output the first frame.

### In another embodiment:

The first logic circuit 1401 is configured to generate a first frame, where the first frame is a non-high throughput non-HT frame or a non-high throughput duplicated non-HT duplicated frame, the first frame includes a first bit, a second bit, and a third bit, the first bit and the second bit are bits in a scrambling sequence of the first frame, and the first device is a station that supports a bandwidth greater than 160 MHz.

The first interface circuit 1402 is configured to output the first frame.

If the second device is a station that supports only a bandwidth less than or equal to 160 MHz, the first bit and the second bit indicate a first channel bandwidth, the first channel bandwidth is one of 20 MHz, 40 MHz, 80 MHz, or 160 MHz, and the third bit does not indicate the first channel bandwidth; or
if the second device is a station that supports a bandwidth greater than 160 MHz, when the first channel bandwidth of the first frame is indicated, the third bit is a first value, and the first bit and the second bit indicate that the first channel bandwidth is one of 20 MHz, 40 MHz, 80 MHz, and 80+80 MHz or 160 MHz; or when the second channel bandwidth of the first frame is indicated, the third bit is a second value and indicates the second channel bandwidth, at least one of the first bit and the second bit does not indicate the second channel bandwidth, and the second channel bandwidth is a bandwidth greater than 160 MHz.

### In still another embodiment:

The first logic circuit 1401 is configured to generate a first frame, where the first frame is a non-high throughput non-HT frame or a non-high throughput duplicated non-HT duplicated frame, the first frame includes a first field, and if at least one bit in bits of the first field is not 0, it indicates that the first field indicates a preamble puncture mode.

The first interface circuit 1402 is configured to output the first frame.

### In still another embodiment:

The first logic circuit 1401 is configured to generate a first frame, where the first frame is a non-high throughput non-HT frame or a non-high throughput duplicated non-HT duplicated frame, and the first frame includes a first field; and
configured to generate a second frame, where the second frame includes a first indication, the second frame includes an association request frame or an association response frame, and the first indication indicates whether the first field indicates a preamble puncture mode.

The first interface circuit 1402 is configured to output the first frame and the second frame.

### In still another embodiment:

The first logic circuit 1401 is configured to generate a first frame, where the first frame is a non-high throughput non-HT frame or a non-high throughput duplicated non-HT duplicated frame, the first frame includes a first bit, a second bit, and a fourth bit, and the first bit and the second bit are bits in a scrambling sequence of the first frame.

If a first bandwidth granularity of the first frame is indicated, the fourth bit is a first value, the first bandwidth granularity is 20 MHz and corresponds to a first channel bandwidth, the first bit and the second bit indicate the first channel bandwidth, and the first channel bandwidth is one of 20 MHz, 40 MHz, 80 MHz, or 160 MHz; or
if a second bandwidth granularity of the first frame is indicated, the fourth bit is a second value, the second bandwidth granularity is 40 MHz and corresponds to a second channel bandwidth, and the second channel bandwidth is a bandwidth greater than 160 MHz.

The first interface circuit 1402 is configured to output the first frame.

FIG. 15 is a schematic diagram of another chip 1500 according to an embodiment of this application. The chip 1500 includes a second logic circuit 1501 and a second interface circuit 1502. The second logic circuit 1501 is configured to perform generation steps in the method according to any one of the possible implementations of the second aspect, the sixth aspect, the eleventh aspect, the twelfth aspect, or the eighteenth aspect. The second interface circuit 1502 is configured to perform a sending or receiving action in the method according to any one of the possible implementations of the second aspect, the sixth aspect, the eleventh aspect, the twelfth aspect, or the eighteenth aspect. In this case, "sending" is equivalent to "output", and "receiving" is equivalent to "input".

For different method embodiments, the second logic circuit 1501 and the second interface circuit 1502 may perform different functions. For example, in an embodiment:
The second interface circuit 1502 is configured to input a first frame sent by a first device, where the first frame is a non-high throughput non-HT frame or a non-high throughput duplicated non-HT duplicated frame, the first frame includes a first bit, a second bit, and a third bit, and the first bit and the second bit are bits in a scrambling sequence of the first frame.

The second logic circuit 1501 is configured to determine a channel bandwidth of the first frame based on the first frame.

If the third bit is a first value, the second device determines, based on the first bit and the second bit, that a bandwidth of the first frame is a first channel bandwidth, and the first channel bandwidth is one of 20 MHz, 40 MHz, 80 MHz, or 160 MHz; or
if the third bit is a second value, the second device determines, based on the third bit, that a channel bandwidth of the first frame is a second channel bandwidth, at least one of the first bit and the second bit does not indicate the second channel bandwidth, and the second channel bandwidth is a bandwidth greater than 160 MHz.

### In another embodiment:

The second interface circuit 1502 is configured to input a first frame sent by a first device, where the first frame is a non-high throughput non-HT frame or a non-high throughput duplicated non-HT duplicated frame, the first frame includes a first bit, a second bit, and a third bit, the first bit and the second bit are bits in a scrambling sequence of the first frame, and the first device is a station that supports a bandwidth greater than 160 MHz.

The second logic circuit 1501 is configured to determine a channel bandwidth based on the first frame.

If the second device is a station that supports only a bandwidth less than or equal to 160 MHz, the second device determines, based on the first bit and the second bit, that a bandwidth of the first frame is a first channel bandwidth, the first channel bandwidth is one of 20 MHz, 40 MHz, 80 MHz, or 160 MHz, and the third bit does not indicate the first channel bandwidth; or
if the second device is a station that supports a bandwidth greater than 160 MHz, when the third bit is a first value, the second device determines, based on the first bit and the second bit, that a bandwidth of the first frame is a first channel bandwidth, and the first channel bandwidth is one of 20 MHz, 40 MHz, 80 MHz, and 80+80 MHz or 160 MHz; or when the third bit is a second value, the second device determines, based on the third bit, that a bandwidth of the first frame is a second channel bandwidth, at least one of the first bit and the second bit does not indicate the second channel bandwidth, and the second channel bandwidth is a bandwidth greater than 160 MHz.

### In still another embodiment:

The second interface circuit 1502 is configured to input a first frame sent by a first device, where the first frame is a non-high throughput non-HT frame or a non-high throughput duplicated non-HT duplicated frame, and the first frame includes a first field.

The second logic circuit 1501 is configured to: if at least one bit in bits of the first field is not 0, determine that the first field indicates a preamble puncture mode.

### In still another embodiment:

The second interface circuit 1502 is configured to input a first frame and a second frame that are sent by a first device, where the first frame is a non-high throughput non-HT frame or a non-high throughput duplicated non-HT duplicated frame, the first frame includes a first field, the second frame includes a first indication, and the second frame includes an association request frame or an association response frame.

The second logic circuit 1501 is configured to determine, based on the first indication, whether the first field indicates a preamble puncture mode.

### In still another embodiment:

The second interface circuit 1502 is configured to input a first frame sent by a first device, where the first frame is a non-high throughput non-HT frame or a non-high throughput duplicated non-HT duplicated frame, the first frame includes a first bit, a second bit, and a fourth bit, and the first bit and the second bit are bits in a scrambling sequence of the first frame.

The second logic circuit 1501 is configured to determine a bandwidth granularity of a channel based on the first frame.

If the fourth bit is a first value, the second device determines that a bandwidth granularity of the first frame is a first bandwidth granularity, the first bandwidth granularity is 20 MHz and corresponds to a first channel bandwidth, the first device determines, based on the first bit and the second bit, that a bandwidth of the first frame is the first channel bandwidth, and the first channel bandwidth is one of 20 MHz, 40 MHz, 80 MHz, or 160 MHz; or
if the fourth bit is a second value, the second device determines that a bandwidth granularity of the first frame is a second bandwidth granularity, the second bandwidth granularity is 40 MHz and corresponds to a second channel bandwidth, and the second channel bandwidth is a bandwidth greater than 160 MHz.

An embodiment of this application further provides a communication device, including one or more processors and one or more memories. The one or more memories are coupled to the one or more processors. The one or more memories are configured to store computer program code, and the computer program code includes computer instructions. When the one or more processors execute the computer instructions, the communication apparatus is enabled to perform the foregoing related method steps to implement the service processing method in the foregoing embodiments. The communication device may be the first device, the second device, or the communication apparatus provided in embodiments of this application.

An embodiment of this application further provides a computer-readable storage medium. The computer-readable storage medium stores computer instructions. When the computer instructions are run on a computer, the computer is enabled to implement the method provided in the foregoing embodiments. The computer may be the first device, the second device, or the communication apparatus provided in embodiments of this application.

An embodiment of this application further provides a computer program product. When the computer program product is run on a computer, the computer is enabled to perform the foregoing related steps to implement the method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the service processing method performed by the electronic device in the foregoing method embodiments.

The electronic device, the computer-readable storage medium, the computer program product, or the chip provided in embodiments is configured to perform the corresponding method provided above. Therefore, for beneficial effects that can be achieved, refer to the beneficial effects in the corresponding method provided above. Details are not described herein again.

Based on the descriptions about the foregoing implementations, a person skilled in the art may understand that, for a purpose of convenient and brief description, division into the foregoing functional modules is used as an example for illustration. In actual application, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, the division into modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or other forms.

The units described as separate parts may or may not be physically separate, and parts displayed as units may be one or more physical units, may be located in one place, or may be distributed in different places. Some or all of the units may be selected depending on actual requirements to achieve the objectives of the solutions in embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In descriptions of this application, unless otherwise specified, "/" means "or". For example, A/B may represent A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of' means two or more. Terms such as "first" and "second" do not limit a quantity and an execution sequence, and the terms such as "first" and "second" do not indicate a definite difference.

In this application, the terms such as "example" or "for example" are used to represent giving an example, an illustration, or descriptions. Any embodiment or design scheme described as an "example" or "for example" in this application should not be explained as being more preferred or having more advantages than another embodiment or design scheme. To be precise, the word such as "example" or "for example" is intended to present a related concept in a specific manner.

## Claims

1. An information indication method, wherein the method comprises:
generating, by a first device, a first frame, wherein the first frame is a non-high throughput non-HT frame or a non-high throughput duplicated non-HT duplicated frame, the first frame comprises a first field, and if at least one bit in the first field is not 0, it indicates that the first field indicates a preamble puncture mode; and
sending, by the first device, the first frame to a second device.

2. An information indication method, wherein the method comprises:
receiving, by a second device, a first frame sent by a first device, wherein the first frame is a non-high throughput non-HT frame or a non-high throughput duplicated non-HT duplicated frame, and the first frame comprises a first field; and
if at least one bit in the first field is not 0, determining, by the second device, a preamble puncture mode based on the first field.

3. The method according to claim 1, wherein the method further comprises:
generating, by the first device, a second frame, wherein the second frame comprises a first indication, the second frame comprises an association request frame or an association response frame, and the first indication indicates whether the first field indicates the preamble puncture mode; and
sending, by the first device, the second frame to the second device.

4. The method according to claim 2, wherein the method further comprises:
receiving, by the second device, a second frame sent by the first device, wherein the second frame comprises a first indication, and the second frame comprises an association request frame or an association response frame; and
determining, by the second device based on the first indication, whether the first field indicates the preamble puncture mode.

5. The method according to any one of claims 1 to 4, wherein the first frame further comprises a third bit:
the third bit is set to a first value, indicating that a bandwidth granularity of the preamble puncture mode indicated by the first field is 20 MHz; or
the third bit is set to a second value, indicating that a bandwidth granularity of the preamble puncture mode indicated by the first field is 40 MHz.

6. The method according to any one of claims 1 to 5, wherein the first field is carried in:
reserved service bits of the first frame;
reserved service bits and the first seven bits of a scrambling sequence of the first frame; or
a frame control field.

7. The method according to any one of claims 1 to 6, wherein the first field is indicated in a non-OFDMA mode.

8. A first device, wherein the device comprises:
a processing unit, configured to generate a first frame, wherein the first frame is a non-high throughput non-HT frame or a non-high throughput duplicated non-HT duplicated frame, the first frame comprises a first field, and if at least one bit in the first field is not 0, it indicates that the first field indicates a preamble puncture mode; and
a sending unit, configured to send the first frame to a second device.

9. A second device, wherein the device comprises:
a receiving unit, configured to receive a first frame sent by a first device, wherein the first frame is a non-high throughput non-HT frame or a non-high throughput duplicated non-HT duplicated frame, and the first frame comprises a first field; and
a processing unit, configured to: if at least one bit in the first field is not 0, determine a preamble puncture mode based on the first field.

10. The device according to claim 8, wherein the device further comprises:
the processing unit is further configured to generate a second frame, wherein the second frame comprises a first indication, the second frame comprises an association request frame or an association response frame, and the first indication indicates whether the first field indicates the preamble puncture mode; and
the sending unit is further configured to send the second frame to the second device.

11. The device according to claim 9, wherein the device further comprises:
the receiving unit is further configured to receive a second frame, wherein the second frame comprises a first indication, and the second frame comprises an association request frame or an association response frame; and
the processing unit is further configured to determine, based on the first indication, whether the first field indicates the preamble puncture mode.

12. The device according to any one of claims 8 to 11, wherein the first frame further comprises a third bit:
the third bit is set to a first value, indicating that a bandwidth granularity of the preamble puncture mode indicated by the first field is 20 MHz; or
the third bit is set to a second value, indicating that a bandwidth granularity of the preamble puncture mode indicated by the first field is 40 MHz.

13. The device according to any one of claims 8 to 12, wherein the first field is carried in:
reserved service bits of the first frame;
reserved service bits and the first seven bits of a scrambling sequence of the first frame; or
a frame control field.

14. The device according to any one of claims 8 to 13, wherein the first field is indicated in a non-OFDMA mode.

15. A communication apparatus, comprising a processor and a memory, wherein the memory stores a computer program, and when the computer program is run by the processor, the communication apparatus is enabled to perform the method according to any one of claims 1 to 7.

16. A computer-readable storage medium, wherein the computer-readable storage medium stores computer instructions, and when the computer instructions are run on a computer, the method according to any one of claims 1 to 7 is performed.

17. A computer program product, wherein when the computer program product runs on a computer, the computer is enabled to perform the method according to any one of claims 1 to 7.
